(19) Europäisches Patentamt
European Patent Office
Office européen des brevets

(11) EP 4 712 192 A1

(12) **EUROPEAN PATENT APPLICATION**
published in accordance with Art. 153(4) EPC

(43) Date of publication:
**18.03.2026 Bulletin 2026/12**

(21) Application number: **24819390.6**

(22) Date of filing: **06.06.2024**

(51) International Patent Classification (IPC):
***H01M 10/0567** (2010.01)* ***H01M 4/36** (2006.01)*
***H01M 4/38** (2006.01)* ***H01M 4/48** (2010.01)*
***H01M 4/587** (2010.01)* ***H01M 10/052** (2010.01)*
***H01M 10/054** (2010.01)* ***H01M 10/0568** (2010.01)*
***H01M 10/0569** (2010.01)*

(52) Cooperative Patent Classification (CPC):
Y02E 60/10

(86) International application number:
**PCT/JP2024/020724**

(87) International publication number:
**WO 2024/253162 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.06.2023 JP 2023094565**

(71) Applicant: **Central Glass Co., Ltd.**
**Yamaguchi 755-0001 (JP)**

(72) Inventors:
- **MIURA, Masahiro**
**Tokyo 101-0054 (JP)**
- **TAKAHASHI, Mikihiro**
**Tokyo 101-0054 (JP)**
- **KAWAHARA, Kei**
**Tokyo 101-0054 (JP)**
- **TOKOMOTO, Junichi**
**Tokyo 101-0054 (JP)**

(74) Representative: **Manitz Finsterwald**
**Patent- und Rechtsanwaltspartnerschaft mbB**
**Martin-Greif-Straße 1**
**80336 München (DE)**

# (54) ELECTROLYTE SOLUTION FOR NONAQUEOUS ELECTROLYTE SECONDARY BATTERY, AND NONAQUEOUS ELECTROLYTE SECONDARY BATTERY CONTAINING SAME

(57) The present invention provides a nonaqueous electrolyte solution which, when used in a nonaqueous electrolyte secondary battery containing Si and/or silicon oxide as a negative electrode active material, can exhibit at least one of improvement of a capacity retention rate after cycles and reduction of the amount of generated gas during high temperature storage in the nonaqueous electrolyte secondary battery. A nonaqueous electrolyte solution contains (I) a nonaqueous organic solvent; (II) a solute that is an ionic salt; and (III) a compound represented by formula (1) or a compound represented by formula (3). (3): PO(OR4)y(OR5)3-y. In formula (1), for example, each R1 is independently a hydrogen atom, a halogen atom, a linear alkyl group having 1-12 carbon atoms or a branched alkyl group having 3-12 carbon atoms. In formula (3), each R4 independently represents an alkenyl group or an alkynyl group; R5 represents an alkyl group or an aryl group; and y is an integer of 2-3.

EP 4 712 192 A1

## Description

### Technical Field

The present disclosure relates to an electrolyte solution for a nonaqueous electrolyte secondary battery containing a sulfate ester compound having a specific bicyclic structure (or spiro structure) or a phosphate ester having a specific unsaturated bond, and a nonaqueous electrolyte secondary battery using the same.

### Background Art

In recent years, power storage systems for applications requiring high energy density in small devices such as information-related devices or communication devices, namely, personal computers, video cameras, digital still cameras, and mobile phones, and furthermore, power storage systems for applications requiring high power in large-scale equipment such as electric vehicles, hybrid vehicles, auxiliary power sources for fuel cell vehicles, and power storage, have been attracting attention. As one candidate for these, nonaqueous electrolyte secondary batteries such as lithium-ion batteries, lithium batteries, lithium-ion capacitors, and sodium-ion batteries are being actively developed.

For nonaqueous electrolyte secondary batteries, it is required to achieve various characteristics such as cycle characteristics, input/output characteristics, storage characteristics, continuous charging characteristics, and safety at a high level as battery characteristics. In addition, in recent years, for in-vehicle batteries, the demand for higher capacity to extend cruising range has been increasing more and more.

Many of these nonaqueous electrolyte secondary batteries have already been put into practical use, but further improvements in increasing capacity are desired. Among these, when an alloy-based active material, particularly an active material containing Si atoms, is used as the negative electrode active material, although an increase in battery capacity is expected, it is known that the degradation of battery performance is significant with long-term use. Therefore, for example, attempts have been made to increase capacity and improve durability to extend the cruising range for applications such as automobiles.

As a means to improve the high-temperature characteristics and battery characteristics upon repeated charge/discharge (cycle characteristics) of nonaqueous electrolyte secondary batteries thus far, the optimization of various battery components, including the active materials of the positive electrode and the negative electrode, has been studied. Nonaqueous electrolyte-related technology is no exception, and it has been proposed to suppress degradation due to the decomposition of the electrolyte solution on the surfaces of the active positive electrode and negative electrode with various additives.

Patent Literatures 1 and 2 propose a method of suppressing degradation of cycle characteristics and storage characteristics, and a method of suppressing the amount of gas generation, by adding a silane compound having an unsaturated bond or a cyclic sulfur compound such as ethylene sulfate to a nonaqueous electrolyte solution.

Patent Literatures 3 to 7 propose a method of improving high-temperature storage characteristics and low-temperature characteristics by suppressing degradation of cycle characteristics and an increase in internal resistance by adding a silane compound having an unsaturated bond to a nonaqueous electrolyte solution.

Patent Literature 8 proposes a method of suppressing degradation of cycle characteristics and increasing initial capacity by adding a phosphorus compound having an unsaturated bond to a nonaqueous electrolyte solution. In addition, Patent Literature 9 proposes a method of improving cycle characteristics and the effect of suppressing resistance increase by adding a phosphate ester having an unsaturated bond or a sulfonate ester to a nonaqueous electrolyte solution.

Patent Literatures 10 and 11 report a method of improving stability at high temperatures, low-temperature characteristics, and cycle characteristics by adding a spiro structure, a dimerized sulfate ester compound, or the like to a nonaqueous electrolyte solution.

### Citation List

### Patent Literatures

Patent Literature 1: International Publication Pamphlet No. WO 2016/133169
Patent Literature 2: International Publication Pamphlet No. WO 2017/138452
Patent Literature 3: Japanese Unexamined Patent Application Publication No. 2016-027028
Patent Literature 4: Japanese Unexamined Patent Application Publication No. 2016-035820
Patent Literature 5: Japanese Unexamined Patent Application Publication No. 2019-102459
Patent Literature 6: Japanese Unexamined Patent Application Publication No. 2020-087690

Patent Literature 7: Japanese Unexamined Patent Application Publication No. 2019-106362
Patent Literature 8: US-A1-2003/0113635
Patent Literature 9: International Publication Pamphlet No. WO 2012/120597
Patent Literature 10: US-A1-2016/0359196
Patent Literature 11: EP-A1-003205655

Summary of Invention

Problems to be solved by the invention

However, for example, in a nonaqueous electrolyte solution containing a silane compound having an unsaturated bond as described in Patent Literatures 1 to 7, a phosphate ester having an unsaturated bond as described in Patent Literature 8, a phosphate ester having an unsaturated bond or a sulfonate ester as described in Patent Literature 9, or the like, when Si or silicon oxide (for example, a content of 0.1 to 50% by mass) is adopted for the negative electrode active material, it has been found that in a nonaqueous electrolyte secondary battery, the cycle characteristics are prone to degradation by repeating charge and discharge, and there is room for further improvement.
Furthermore, it has been found that with the nonaqueous electrolyte solution containing a spiro structure or a dimerized sulfate ester compound described in Patent Literatures 10 and 11, in a nonaqueous electrolyte secondary battery using Si, particularly silicon oxide (for example, a content of 0.1 to 50% by mass), for the negative electrode active material, the amount of gas generation during high-temperature storage is prone to increase, and there is room for further improvement.
Accordingly, the present disclosure relates to providing an electrolyte solution for a nonaqueous electrolyte secondary battery that, in a nonaqueous electrolyte secondary battery including Si and/or silicon oxide as a negative electrode, can exhibit at least one of an improvement in capacity retention rate after cycling and a suppression of the amount of gas generation during high-temperature storage, and a nonaqueous electrolyte secondary battery using the same.

Means for solution of the problems

As a result of diligent studies by the present inventors to achieve the above problem, they have found that, as a nonaqueous electrolyte solution adopted in a nonaqueous electrolyte secondary battery including Si and/or silicon oxide as a negative electrode active material, by causing it to contain (III) a specific bicyclic sulfate ester compound or (IV) a specific phosphate ester compound, along with (I) a nonaqueous organic solvent and (II) a solute that is an ionic salt, the above problem can be achieved, and have thus arrived at the present invention.
That is, the present disclosure relates to a nonaqueous electrolyte solution for a nonaqueous electrolyte secondary battery including a negative electrode containing Si and/or silicon oxide as a negative electrode active material, comprising

(I) a nonaqueous organic solvent,
(II) a solute that is an ionic salt, and
(III) the following compound,

(1) a bicyclic sulfate ester compound represented by the following general formula (1) (hereinafter, also simply referred to as "compound represented by formula (1)"),
(2) a phosphate ester represented by the following general formula (3) (hereinafter, also simply referred to as "compound represented by formula (3)"), or
(3) a combination of a bicyclic sulfate ester compound represented by the following general formula (1) and a silane compound having an unsaturated bond represented by the following general formula (2) (hereinafter, also simply referred to as "compound represented by formula (2)") and/or a phosphate ester represented by the following general formula (3).

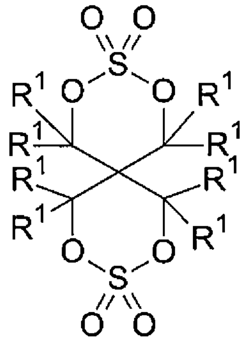

( 1 )

[In general formula (1), $R^1$ each independently represents a hydrogen atom, a halogen atom, a linear alkyl group having 1 to 12 carbon atoms, or a branched alkyl group having 3 to 12 carbon atoms, an oxygen atom may be included between carbon-carbon bonds in the alkyl group, and any hydrogen atom of the alkyl group may be substituted with a fluorine atom.]

$$Si(R^2)_x(R^3)_{4-x} \quad (2)$$

[In general formula (2), $R^2$ each independently represents an alkenyl group or an alkynyl group, $R^3$ each independently represents a group selected from the group consisting of a fluorine atom, an alkyl group, an alkoxy group, an aryl group, and an aryloxy group, a hydrogen atom of these groups may be substituted with a fluorine atom, and x is an integer of 2 to 4.]

$$PO(OR^4)_y(OR^5)_{3-y} \quad (3)$$

[In general formula (3), $R^4$ each independently represents an alkenyl group or an alkynyl group, $R^5$ represents an alkyl group or an aryl group, a hydrogen atom of these groups may be substituted with a fluorine atom, and y is an integer of 2 to 3.]

In addition, if necessary, graphite may be used in combination with Si and/or silicon oxide as the negative electrode active material.

Preferred embodiments of the present disclosure are, for example, as follows.

1. A nonaqueous electrolyte solution for a nonaqueous electrolyte secondary battery containing a negative electrode that includes Si and/or silicon oxide as a negative electrode active material, comprising

    (I) a nonaqueous organic solvent,
    (II) a solute that is an ionic salt, and,
    (III) the compound represented by the formula (1).

2. A nonaqueous electrolyte solution for a nonaqueous electrolyte secondary battery containing a negative electrode that includes Si and/or silicon oxide as a negative electrode active material, comprising

    (I) a nonaqueous organic solvent,
    (II) a solute that is an ionic salt, and,
    (IV) the compound represented by the formula (3).

3. A nonaqueous electrolyte solution for a nonaqueous electrolyte secondary battery containing a negative electrode that includes Si and/or silicon oxide as a negative electrode active material, comprising

    (I) a nonaqueous organic solvent,
    (II) a solute that is an ionic salt,
    (III) the compound represented by the formula (1), and,
    (V) the compound represented by the formula (2) and/or the compound represented by the formula (3).

4. The nonaqueous electrolyte solution according to 1 or 3 above, wherein at least one of the eight $R^1$ is a hydrogen atom.

5. The nonaqueous electrolyte solution according to 3 above, wherein $R^2$ is a group selected from the group consisting

of a vinyl group, a 2-propenyl group, a 1-propenyl group, an ethynyl group, and a 2-propynyl group, each independently, and $R^3$ is a group selected from the group consisting of a fluorine atom, a methyl group, an ethyl group, a propyl group, a 2,2,2-trifluoroethyl group, a 2,2,3,3-tetrafluoropropyl group, a 1,1,1-trifluoroisopropyl group, a 1, 1, 1,3,3,3-hexafluoroisopropyl group, a 2,2,2-trifluoroethoxy group, a 2,2,3,3-tetrafluoropropoxy group, a 2,2,3,3,3-pentafluoropropoxy group, a 1, 1, 1-trifluoroisopropoxy group, and a 1,1,1,3,3,3-hexafluoroisopropoxy group, each independently.

6. The nonaqueous electrolyte solution according to 3 or 5 above, wherein at least one of the x $R^2$ groups is a vinyl group, and at least one of the (4-x) $R^3$ groups is a methyl group or a fluorine atom.

7. The nonaqueous electrolyte solution according to 3 above, wherein x is 3 or 4.

8. The nonaqueous electrolyte solution according to 2 or 3 above, wherein $R^4$ is a group selected from the group consisting of a 1-propenyl group, a 2-propenyl group, an ethynyl group, a 2-propynyl group, and a 2-butynyl group, each independently, and $R^5$ is an alkyl group.

9. The nonaqueous electrolyte solution according to 2, 3 or 8 above, wherein $R^4$ is a group selected from the group consisting of a 2-propenyl group, a 2-propynyl group, and a 2-butynyl group, each independently, and $R^5$ is a methyl group or an ethyl group.

10. The nonaqueous electrolyte solution according to 2 or 3 above, wherein y is 3.

11. The nonaqueous electrolyte solution according to 1 or 3 above, wherein the concentration of the compound represented by formula (1) is 0.1 to 5% by mass with respect to the total amount of the nonaqueous electrolyte solution.

12. The nonaqueous electrolyte solution according to 2 or 3 above, wherein the concentration of the compound represented by formula (3) is 0.01 to 5% by mass with respect to the total amount of the nonaqueous electrolyte solution.

13. The nonaqueous electrolyte solution according to 3 above, wherein the concentration of the compound represented by formula (2) is 0.01 to 5% by mass with respect to the total amount of the nonaqueous electrolyte solution.

14. The nonaqueous electrolyte solution according to any one of 1 to 13 above, wherein the negative electrode active material further comprises graphite.

15. The nonaqueous electrolyte solution according to 14 above, wherein the content of the Si and/or silicon oxide is 0.1 to 50% by mass with respect to the total amount of the Si and/or silicon oxide and graphite included in the negative electrode active material.

16. The nonaqueous electrolyte solution according to any one of 1 to 15 above, wherein the nonaqueous organic solvent is at least one selected from the group consisting of a cyclic ester, a chain ester, a cyclic ether, a chain ether, a sulfone compound, and a sulfoxide compound.

17. The nonaqueous electrolyte solution according to 16 above, wherein the cyclic ester is a cyclic carbonate.

18. The nonaqueous electrolyte solution according to 16 above, wherein the chain ester is a chain carbonate.

19. The nonaqueous electrolyte solution according to any one of 1 to 15 above, wherein the nonaqueous organic solvent is at least one selected from the group consisting of propylene carbonate, ethylene carbonate, butylene carbonate, diethyl carbonate, dimethyl carbonate, ethyl methyl carbonate, γ-butyrolactone, γ-valerolactone, methyl acetate, methyl propionate, ethyl propionate, tetrahydrofuran, 2-methyltetrahydrofuran, dioxane, dimethoxyethane, diethyl ether, dimethyl sulfoxide, and sulfolane.

20. The nonaqueous electrolyte solution according to any one of 1 to 19 above, wherein the solute that is an ionic salt is composed of a cation and an anion, the cation is selected from the group consisting of an alkali metal ion, an alkaline earth metal ion, and quaternary ammonium, and the anion is selected from the group consisting of hexafluorophosphate, tetrafluoroborate, perchlorate, hexafluoroarsenate, hexafluoroantimonate, and bis(fluorosulfonyl)imide.

21. The nonaqueous electrolyte solution according to 20 above, wherein the alkali metal ion is a lithium ion or a sodium ion.

22. The nonaqueous electrolyte solution according to any one of 1 to 21 above, further containing at least one selected from the group consisting of lithium difluorophosphate, sodium difluorophosphate, lithium fluorosulfate, sodium fluorosulfate, lithium trifluoromethanesulfonate, sodium trifluoromethanesulfonate, lithium difluorobis(oxalato)phosphate, sodium difluorobis(oxalato)phosphate, lithium difluorooxalatoborate, sodium difluorooxalatoborate, lithium bis(oxalato)borate, sodium bis(oxalato)borate, lithium tetrafluorooxalatophosphate, sodium tetrafluorooxalatophosphate, lithium tris(oxalato)phosphate, sodium tris(oxalato)phosphate, lithium difluoro(malonato)borate, sodium difluoro(malonato)borate, lithium tetrafluoro(malonato)phosphate, sodium tetrafluoro(malonato)phosphate, lithium monofluorophosphate, sodium monofluorophosphate, lithium bis(difluorophosphoryl)imide, sodium bis(difluorophosphoryl)imide, lithium (difluorophosphoryl)(fluorosulfonyl)imide, sodium (difluorophosphoryl)(fluorosulfonyl)imide, lithium bis(trifluoromethanesulfonyl)imide, sodium bis(trifluoromethanesulfonyl)imide, lithium bis(pentafluoroethanesulfonyl)imide, sodium bis(pentafluoroethanesulfonyl)imide, lithium (trifluoromethanesulfonyl)(pentafluoroethanesulfonyl)imide, sodium (trifluoromethanesulfonyl)(pentafluoroethanesulfonyl)imide, lithium (trifluoromethanesulfonyl)(fluorosulfonyl)imide, sodium (trifluoromethanesulfonyl)(fluorosulfonyl)imide, lithium (pentafluoroethanesulfonyl)(fluorosulfonyl)imide, sodium (pentafluoroethanesulfonyl)(fluorosulfonyl)imide, lithium tris(trifluoromethanesulfonyl)methide, sodium tris(trifluoromethanesulfonyl)methide, lithium acrylate, sodium acrylate, lithium methacrylate, sodium methacrylate, lithium methyl sulfate, sodium methyl sulfate, lithium ethyl sulfate, and sodium ethyl sulfate.

23. The nonaqueous electrolyte solution according to any one of 1 to 22 above, further containing at least one selected from the group consisting of cyclohexylbenzene, cyclohexylfluorobenzene, biphenyl, 2-fluorobiphenyl, t-butylbenzene, t-amylbenzene, 2-fluorotoluene, fluorobenzene, vinylene carbonate, oligomer of vinylene carbonate (number average molecular weight of 170 to 5000 in terms of polystyrene), vinyl ethylene carbonate, difluoroanisole, fluoroethylene carbonate, 1,6-diisocyanatohexane, ethynyl ethylene carbonate, trans-difluoroethylene carbonate, methyl propargyl carbonate, ethyl propargyl carbonate, dipropargyl carbonate, maleic anhydride, succinic anhydride, 1,3-propanesultone, 1,3-propenesultone, 1,4-butanesultone, dimethyl vinylene carbonate, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, phenyl difluorophosphate, 1,2-ethanedisulfonic anhydride, tris(trimethylsilyl) borate, succinonitrile, (ethoxy)pentafluorocyclotriphosphazene, tetrafluoro(picolinato)phosphate, difluoro(picolinato)borate, and 1,3-dimethyl-1,3-divinyl-1,3-di(1,1,1,3,3,3-hexafluoroisopropyl)disiloxane.

24. A nonaqueous electrolyte secondary battery, comprising

a negative electrode containing Si and/or silicon oxide as a negative electrode active material,
a positive electrode, and
the nonaqueous electrolyte solution according to any one of 1 to 23 above.

25. The nonaqueous electrolyte secondary battery according to 24 above, wherein the negative electrode active material further contains graphite.

Advantageous Effects of Invention

The nonaqueous electrolyte solution of the present disclosure, when used in a nonaqueous electrolyte secondary battery including Si and/or silicon oxide as a negative electrode active material, can exhibit at least one of an improvement in the capacity retention rate of the nonaqueous electrolyte secondary battery after cycling and a suppression of the amount of gas generation during high-temperature storage.

Description of Embodiments

Hereinafter, the constitution of the electrolyte solution for a nonaqueous electrolyte secondary battery according to the present disclosure will be described in detail.

Regarding Component (I) (Nonaqueous Organic Solvent)

The nonaqueous organic solvent used in the electrolyte solution for a nonaqueous electrolyte secondary battery in the present disclosure is not particularly limited as long as it can dissolve component (II), the compound represented by formula (1), the compound represented by formula (2), and the compound represented by formula (3), which will be detailed below, and any nonaqueous organic solvent can be used. As specific examples of such a nonaqueous organic solvent, there can be mentioned, for example, cyclic carbonates which are also cyclic esters, such as propylene carbonate (hereinafter, may be notated as "PC"), ethylene carbonate (hereinafter, may be notated as "EC"), and butylene carbonate; chain carbonates which are also chain esters, such as diethyl carbonate (hereinafter, may be notated as "DEC"), dimethyl carbonate (hereinafter, may be notated as "DMC"), and ethyl methyl carbonate (hereinafter, may be notated as "EMC"); cyclic esters such as γ-butyrolactone and γ-valerolactone; chain esters such as methyl acetate, methyl propionate, and ethyl propionate (hereinafter, may be notated as "EP"); cyclic ethers such as tetrahydrofuran, 2-methyltetrahydrofuran, and dioxane; chain ethers such as dimethoxyethane and diethyl ether; sulfone compounds and sulfoxide compounds such as dimethyl sulfoxide and sulfolane. The nonaqueous organic solvent of the present disclosure may be used as one type alone, or two or more types may be mixed and used in any combination and ratio according to the application. Among these, from the viewpoint of electrochemical stability against oxidation and reduction and chemical stability related to heat and reaction with the aforementioned solute, propylene carbonate, ethylene carbonate, diethyl carbonate, dimethyl carbonate, ethyl methyl carbonate, methyl propionate, and ethyl propionate are particularly preferable.

In addition, as the nonaqueous organic solvent, for example, when one or more types from cyclic carbonates with a high dielectric constant and one or more types from chain carbonates or chain esters with a low liquid viscosity are included, it is preferable because the ionic conductivity of the electrolyte solution increases. Specifically, those including

the following combinations are more preferable.

(1) Combination of EC and EMC,
(2) Combination of EC and DEC,
(3) Combination of EC, DMC, and EMC,
(4) Combination of EC, DEC, and EMC,
(5) Combination of EC, EMC, and EP,
(6) Combination of PC and DEC,
(7) Combination of PC and EMC,
(8) Combination of PC and EP,
(9) Combination of PC, DMC, and EMC,
(10) Combination of PC, DEC, and EMC,
(11) Combination of PC, DEC, and EP,
(12) Combination of PC, EC, and EMC,
(13) Combination of PC, EC, DMC, and EMC,
(14) Combination of PC, EC, DEC, and EMC,
(15) Combination of PC, EC, EMC, and EP

Regarding Component (II) (Solute that is an Ionic Salt)

As the solute used in the electrolyte solution for a nonaqueous electrolyte secondary battery in the present disclosure, it is an ionic salt composed of a pair of any cation and anion, and as long as it exists in an ionic state as cations and anions in the nonaqueous organic solvent, various solutes that are ionic salts can be used without particular limitation. As specific examples of such a solute that is an ionic salt, cations include alkali metal ions such as lithium ions and sodium ions, alkaline earth metal ions, quaternary ammonium, and the like, and anions include hexafluorophosphate, tetrafluoroborate, perchlorate, hexafluoroarsenate, hexafluoroantimonate, bis(fluorosulfonyl)imide, and the like.

The solute that is an ionic salt in the present disclosure may be used as one type alone, or two or more types may be mixed and used in any combination and ratio according to the application. Among these, considering the energy density, output characteristics, life, etc., as a battery, as cations, lithium, sodium, magnesium, quaternary ammonium, and the like are preferably used, and as anions, hexafluorophosphate, tetrafluoroborate, bis(fluorosulfonyl)imide, and the like are preferably used.

The concentration of the solute that is an ionic salt in the electrolyte solution for a nonaqueous electrolyte secondary battery in the present disclosure (hereinafter, referred to as "solute concentration") is not particularly limited as long as it is a concentration at which the function as a solute that is an ionic salt can be sufficiently exhibited, but for example, the lower limit may be 0.5 mol/L or more, preferably 0.7 mol/L or more, and more preferably 0.9 mol/L or more, and the upper limit may be in the range of 5 mol/L or less, preferably 4 mol/L or less, and more preferably 2 mol/L or less. A concentration of 0.5 mol/L or more is preferable because the ionic conductivity is less likely to decrease, and the cycle characteristics and output characteristics of the nonaqueous electrolyte battery are less likely to deteriorate. On the other hand, a concentration of 5 mol/L or less is preferable because the viscosity of the electrolyte solution for a nonaqueous electrolyte battery is less likely to increase, and it is less likely to reduce ionic conduction. When two or more types of solutes that are ionic salts are used, it is preferable that the total concentration of these solutes is within the above-mentioned range.

The liquid temperature when dissolving the solute that is an ionic salt in the nonaqueous organic solvent is not particularly limited, but for example, -20 to 80°C is preferable, and 0 to 60°C is more preferable.

Description of Component (III), Component (IV) and Component (V)

Regarding the Compound Represented by Formula (1) (also simply referred to as "Compound (1)")

The compound (1) used in the electrolyte solution for a nonaqueous electrolyte secondary battery of the present disclosure is a bicyclic sulfate ester compound represented by the following formula (1).

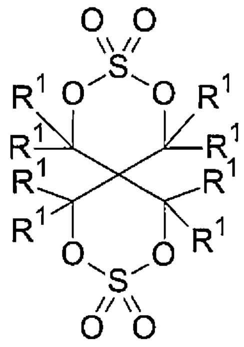

( 1 )

In the formula, $R^1$ each independently represents a hydrogen atom, a halogen atom, a linear alkyl group having 1 to 12 carbon atoms, or a branched alkyl group having 3 to 12 carbon atoms, and an oxygen atom may be included between carbon-carbon bonds in the alkyl group. In addition, any hydrogen atom of the alkyl group may be substituted with a fluorine atom.

As the halogen atom, for example, a fluorine atom, a chlorine atom, a bromine atom, etc. can be mentioned, and as the halogen atom, a fluorine atom can be particularly preferably exemplified.

As the linear alkyl group having 1 to 12 carbon atoms, for example, alkyl groups having 1 to 6 carbon atoms, such as a methyl group, an ethyl group, an n-propyl group, an n-butyl group, an n-pentyl group, etc. can be preferably exemplified.

As the branched alkyl group having 3 to 12 carbon atoms, for example, branched alkyl groups having 3 to 6 carbon atoms, such as an isopropyl group, an isobutyl group, a secondary butyl group, a tertiary butyl group, a neopentyl group, an isopentyl group, a secondary pentyl group, a 3-pentyl group, a tert-pentyl group, can be preferably exemplified.

In addition, an oxygen atom may be included between carbon-carbon bonds in the above alkyl group, and any hydrogen atom of the above alkyl group may be substituted with a fluorine atom.

As a group in which an oxygen atom is included between carbon-carbon bonds in an alkyl group, for example, an alkoxyalkyl group can be mentioned, and specific examples thereof include a methoxymethyl group, an ethoxymethyl group, a propoxymethyl group, a methoxyethyl group, an ethoxyethyl group, a 1-methylethoxymethyl group, and the like. As an alkyl group in which any hydrogen atom of the alkyl group is substituted with a fluorine atom, for example, a trifluoromethyl group, a 2,2-difluoroethyl group, a 2,2,2-trifluoroethyl group, a 2,2,3,3-tetrafluoropropyl group, a 1, 1, 1,3,3,3-hexafluoroisopropyl group, a 1-trifluoromethylethyl group, a 1,2-difluoropropyl group, and the like can be preferably exemplified.

It is preferable that at least one of the eight $R^1$ is a hydrogen atom, and it is particularly preferable that all $R^1$ are hydrogen atoms.

As specific examples of the compound (1) used in the electrolyte solution for a nonaqueous electrolyte secondary battery in the present disclosure, the following compounds can be preferably exemplified as representative compounds of the bicyclic sulfate ester compound. These compounds are referred to as compound numbers, compound 1-1 and compound 1-2, respectively, in the present disclosure as follows. These compounds are known compounds, and for example, a production method is disclosed in Can. J. Chem., 79, 1040-1048 (2001), etc.

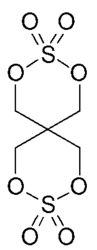

Compound 1-1

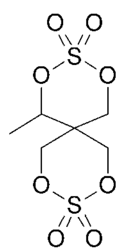

Compound 1-2

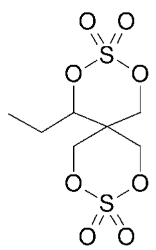

Compound 1-3

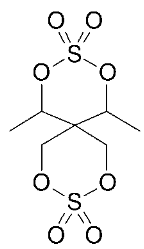

Compound 1-4

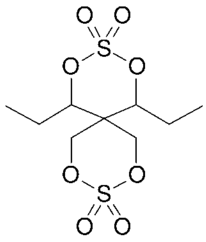
Compound 1-5

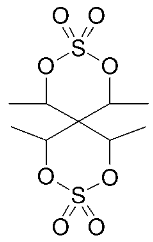
Compound 1-6

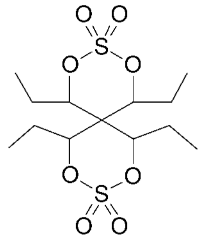
Compound 1-7

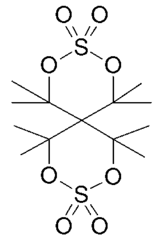
Compound 1-8

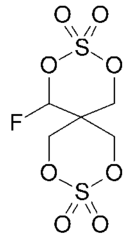
Compound 1-9

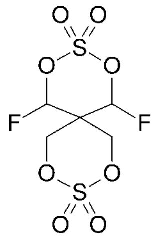
Compound 1-10

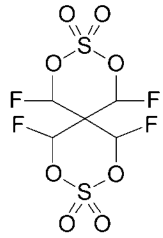
Compound 1-11

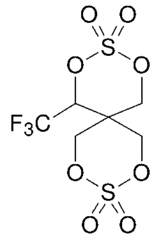
Compound 1-12

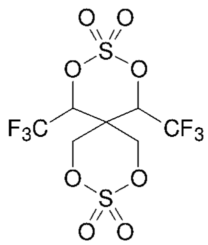
Compound 1-13

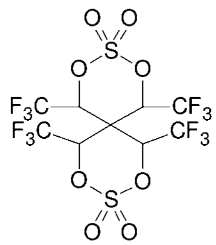
Compound 1-14

It is appropriate that compound (1) is blended generally in an amount of 0.1 to 5% by mass, and preferably 0.1 to 4% by mass, when the total amount of the nonaqueous electrolyte solution is taken as 100% by mass.

Regarding the Compound Represented by Formula (2) (also simply referred to as "Compound (2)")

The compound (2) used in the electrolyte solution for a nonaqueous electrolyte secondary battery of the present disclosure is a silane compound represented by the following general formula (2).

$$Si(R^2)_x(R^3)_{4-x} \qquad (2)$$

In general formula (2), x is an integer of 2 to 4. $R^2$ each independently represents an alkenyl group or an alkynyl group. The number of carbon atoms in each is preferably 2 to 5, and more preferably 2 or 3.

$R^3$ each independently represents a group selected from the group consisting of a fluorine atom, an alkyl group, an alkoxy group, an aryl group, and an aryloxy group, and a hydrogen atom of these groups may be substituted with a fluorine atom.

As specific examples of $R^2$, a vinyl group, a 2-propenyl group, a 1-propenyl group, an ethynyl group, a 2-propynyl group, and the like can be preferably exemplified, each independently.

As the compound (2), it is particularly important that it is a compound having two or more alkenyl groups or alkynyl groups represented by $R^2$. That is, in general formula (2), x is 2 or more. Furthermore, it is preferable for x to be 3 or 4 from the viewpoint of the effect of cycle characteristics and/or gas suppression, and it is particularly preferable for x to be 4.

As the alkyl group for $R^3$, an alkyl group having 1 to 5, preferably 1 to 3, carbon atoms is suitable, and it may be a linear alkyl group or a branched alkyl group. As the linear alkyl group, for example, a methyl group, an ethyl group, a propyl group, and the like can be preferably exemplified. As the branched alkyl group, for example, an isopropyl group, an isobutyl group, and the like can be preferably exemplified. As the alkoxy group, the corresponding alkoxy group of the above linear or branched alkyl group can be preferably exemplified, and specifically, for example, a methoxy group, an ethoxy group, a propoxy group, an isopropoxy group, and the like can be preferably exemplified. A hydrogen atom of these alkyl groups or alkoxy groups may be substituted with a fluorine atom, and as such a fluorinated alkyl group or alkoxy group, for example, a

2,2,2-trifluoroethyl group, a 2,2,3,3-tetrafluoropropyl group, a 1,1,1-trifluoroisopropyl group, a 1, 1, 1,3,3,3-hexafluoroisopropyl group, a 2,2,2-trifluoroethoxy group, a 2,2,3,3-tetrafluoropropoxy group, a 2,2,3,3,3-pentafluoropropoxy group, a 1,1,1-trifluoroisopropoxy group, a 1,1,1,3,3,3-hexafluoroisopropoxy group, and the like can be preferably exemplified. At least one of $R^3$ may be, in particular, a methyl group or a fluorine atom. It is preferable that at least one of the x $R^2$ groups is a vinyl group, and at least one of the (4-x) $R^3$ groups is a methyl group or a fluorine atom.

As the aryl group, for example, a phenyl group and the like can be preferably exemplified. It may be an aryl group in which its hydrogen atoms are substituted with fluorine atoms. As such an aryl group substituted with fluorine atoms, for example, a pentafluorophenyl group and the like can be preferably exemplified. An aryloxy group is the corresponding oxy group of an aryl group, and an aryloxy group having a fluorine atom can also be similarly preferably exemplified.

As specific examples of the compound (2), the following compounds can be preferably exemplified as representative compounds (2) of the silane compound. These compounds are referred to by the 2-series numbers described below the chemical formulas as compound numbers, respectively, in the present disclosure as follows. All of these compounds are known compounds, and for example, production methods are disclosed in Japanese Unexamined Patent Application Publication No. 2000-143677, Japanese Unexamined Patent Application Publication No. 2004-256494, Japanese Unexamined Patent Application Publication No. Hei 05-104541, etc.

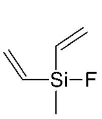
Compound 2-1

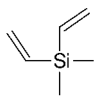
Compound 2-2

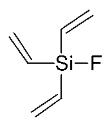
Compound 2-3

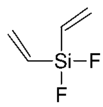
Compound 2-4

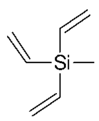
Compound 2-5

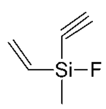
Compound 2-6

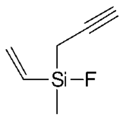
Compound 2-7

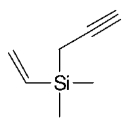
Compound 2-8

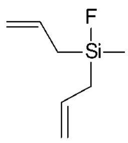
Compound 2-9

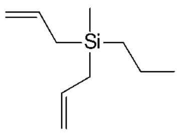
Compound 2-10

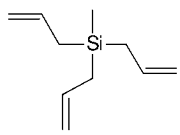
Compound 2-11

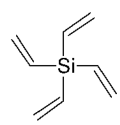
Compound 2-12

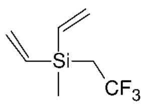
Compound 2-13

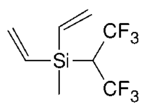
Compound 2-14

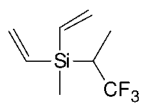
Compound 2-15

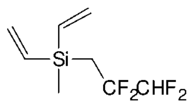
Compound 2-16

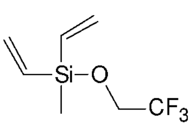
Compound 2-17

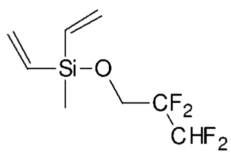
Compound 2-18

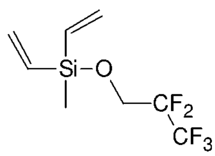
Compound 2-19

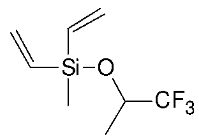
Compound 1-20

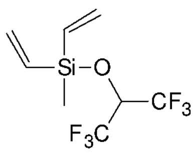
Compound 2-21

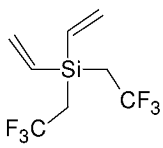
Compound 2-22

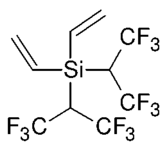
Compound 2-23

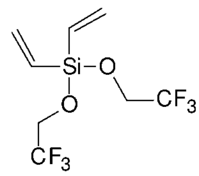
Compound 1-24

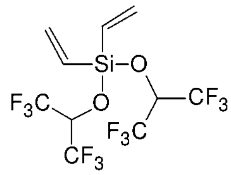

Compound 2-25

It is appropriate that compound (2) is used generally in an amount of 0.01 to 5% by mass, and preferably 0.1 to 2.5% by mass, when the total amount of the nonaqueous electrolyte solution is taken as 100% by mass.

Regarding the Compound Represented by Formula (3) (also simply referred to as "Compound (3)")

The compound (3) used in the electrolyte solution for a nonaqueous electrolyte secondary battery of the present disclosure is a compound represented by the following general formula (3).

$$PO(OR^4)_y(OR^5)_{3-y} \qquad (3)$$

In general formula (3), y is 2 or 3. $R^4$ each independently represents an alkenyl group or an alkynyl group. The number of carbon atoms in each is preferably 2 to 5, and more preferably 2 to 3. In particular, a phosphate ester including a plurality of alkynyl groups is preferable.

As $R^4$, specifically, a vinyl group, a 2-propenyl group, a 1-propenyl group, an ethynyl group, a 2-propynyl group, a 1-propynyl group, a 2-butynyl group, and the like are preferable, each independently, and among these, a 2-propenyl group, a 2-propynyl group, a 2-butynyl group, and the like are preferable.

The compound (3) used in the electrolyte solution for a nonaqueous electrolyte secondary battery in the present disclosure has two or more alkenyl groups or alkynyl groups represented by $R^4$. That is, y in the formula is 2 or more. It is particularly preferable for y to be 3 from the viewpoint of the effect of improving cycle characteristics and/or gas suppression.

When y is 2, $R^5$ represents an alkyl group or an aryl group, and a hydrogen atom of these groups may be substituted with a fluorine atom.

As the alkyl group for $R^3$, an alkyl group having 1 to 5, preferably 1 to 3, carbon atoms is suitable, and it may be a linear alkyl group or a branched alkyl group. As the linear alkyl group, for example, a methyl group, an ethyl group, a propyl group, and the like can be preferably exemplified. As the branched alkyl group, for example, an isopropyl group, an isobutyl group, and the like can be preferably exemplified. A hydrogen atom of the alkyl group may be substituted with a fluorine atom, and as such an alkyl group substituted with a fluorine atom, for example, a 2,2,2-trifluoroethyl group, a 2,2,3,3-tetrafluoropropyl group, a 1,1,1-trifluoroisopropyl group, a 1,1,1,3,3,3-hexafluoroisopropyl group, and the like can be preferably exemplified.

As the aryl group, for example, a phenyl group and the like can be preferably exemplified. It may be an aryl group in which its hydrogen atoms are substituted with fluorine. As such an aryl group substituted with fluorine atoms, for example, a pentafluorophenyl group and the like can be preferably exemplified.

As specific examples of the compound (3), the following compounds can be preferably exemplified as representative compounds. These compounds are referred to by the 3-series numbers described below the chemical formulas as compound numbers, respectively, in the present disclosure as follows. All of these compounds are known compounds.

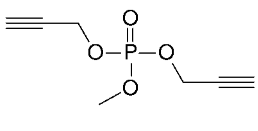

Compound 3-1

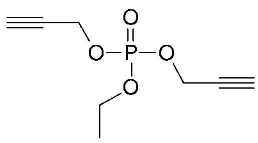

Compound 3-2

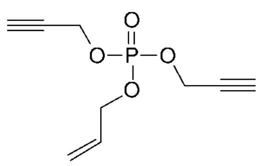

Compound 3-3

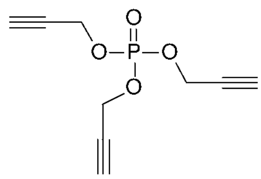

Compound 3-4

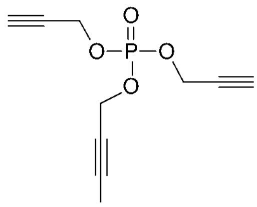

Compound 3-5

It is appropriate that the compound (3) used in the electrolyte solution for a nonaqueous electrolyte secondary battery in the present disclosure is in an amount of generally 0.01 to 5% by mass, and preferably 0.1 to 2.5% by mass, when the total amount of the nonaqueous electrolyte solution is taken as 100% by mass.

Compound (2) and/or compound (3) may be used in combination with compound (1).

In this case, it is suitable that the total concentration of compound (1) and compound (2) and/or compound (3) is, for example, 0.1 to 5% by mass, and preferably 0.5 to 4% by mass, with respect to the total amount of the nonaqueous electrolyte solution.

When the electrolyte solution for a nonaqueous electrolyte secondary battery of the present disclosure, which uses compound (1) and compound (2) and/or compound (3) in combination, is used in a nonaqueous electrolyte secondary battery containing a negative electrode having Si and/or silicon oxide as a negative electrode active material, both excellent cycle characteristics and excellent gas suppression characteristics are exhibited in a well-balanced manner.

Regarding Additives

To the electrolyte solution for a nonaqueous electrolyte battery of the present disclosure, additives generally used in this technical field may be added in any ratio as long as the gist of the present disclosure is not impaired.

When the nonaqueous electrolyte solution of the present disclosure includes the aforementioned additives, the content thereof may be 0.01% by mass or more and 10% by mass or less with respect to the total amount of the nonaqueous electrolyte solution.

As such additives, for example, there can be mentioned cyclohexylbenzene, cyclohexylfluorobenzene, biphenyl, 2-fluorobiphenyl, t-butylbenzene, t-amylbenzene, 2-fluorotoluene, fluorobenzene, vinylene carbonate (hereinafter, may be abbreviated as "VC"), oligomer of vinylene carbonate (number average molecular weight of 170 to 5000 in terms of polystyrene), vinyl ethylene carbonate, difluoroanisole, fluoroethylene carbonate (hereinafter, may be abbreviated as "FEC"), 1,6-diisocyanatohexane, ethynyl ethylene carbonate, trans-difluoroethylene carbonate, methyl propargyl carbonate, ethyl propargyl carbonate, dipropargyl carbonate, maleic anhydride, succinic anhydride, 1,3-propanesultone, 1,3-propenesultone, 1,4-butanesultone, dimethyl vinylene carbonate, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, phenyl difluorophosphate, 1,2-ethanedisulfonic anhydride, tris(trimethylsilyl) borate, succinonitrile, (ethoxy)pentafluorocyclotriphosphazene, tetrafluoro(picolinato)phosphate, difluoro(picolinato)borate, 1,3-dimethyl-1,3-divinyl-1,3-di(1,1,1,3,3,3-hexafluoroisopropyl)disiloxane, and the like.

As the additives, for example, there can be mentioned lithium difluorophosphate, sodium difluorophosphate, lithium fluorosulfate, sodium fluorosulfate, lithium trifluoromethanesulfonate, sodium trifluoromethanesulfonate, lithium difluorobis(oxalato)phosphate, sodium difluorobis(oxalato)phosphate, lithium difluorooxalatoborate, sodium difluorooxalatoborate, lithium bis(oxalato)borate, sodium bis(oxalato)borate, lithium tetrafluorooxalatophosphate, sodium tetrafluorooxalatophosphate, lithium tris(oxalato)phosphate, sodium tris(oxalato)phosphate, lithium difluoro(malonato)borate, sodium difluoro(malonato)borate, lithium tetrafluoro(malonato)phosphate, sodium tetrafluoro(malonato)phosphate, lithium monofluorophosphate, sodium monofluorophosphate, lithium bis(difluorophosphoryl)imide, sodium bis(difluorophosphoryl)imide, lithium (difluorophosphoryl)(fluorosulfonyl)imide, sodium (difluorophosphoryl)(fluorosulfonyl)imide, lithium bis(trifluoromethanesulfonyl)imide, sodium bis(trifluoromethanesulfonyl)imide, lithium bis(pentafluoroethanesulfonyl)imide, sodium bis(pentafluoroethanesulfonyl)imide, lithium (trifluoromethanesulfonyl)(pentafluoroethanesulfonyl) imide, sodium (trifluoromethanesulfonyl)(pentafluoroethanesulfonyl)imide, lithium (trifluoromethanesulfonyl)(fluorosulfonyl)imide, sodium (trifluoromethanesulfonyl)(fluorosulfonyl)imide, lithium (pentafluoroethanesulfonyl)(fluorosulfonyl) imide, sodium (pentafluoroethanesulfonyl)(fluorosulfonyl)imide, lithium tris(trifluoromethanesulfonyl)methide, sodium tris(trifluoromethanesulfonyl)methide, carboxylate salts such as lithium acrylate, sodium acrylate, lithium methacrylate, and sodium methacrylate, sulfate ester salts such as lithium methyl sulfate, sodium methyl sulfate, lithium ethyl sulfate, and sodium ethyl sulfate, and the like.

In addition, it is also possible to use the electrolyte solution for a nonaqueous electrolyte battery in a quasi-solidified state by means of a gelling agent or a cross-linked polymer, such as when it is used in a nonaqueous electrolyte battery called a lithium polymer battery.

Regarding Nonaqueous Electrolyte Secondary Battery

The constitution of the nonaqueous electrolyte secondary battery in which the electrolyte solution for a nonaqueous electrolyte secondary battery of the present disclosure is used will be described.

The nonaqueous electrolyte secondary battery in the present disclosure basically adopts a constitution that is used in general nonaqueous secondary batteries. That is, it consists of a positive electrode and a negative electrode capable of occluding and releasing lithium, a current collector, a separator, a container, and the like. In particular, even when the electrolyte solution for a nonaqueous electrolyte secondary battery of the present disclosure is applied to a nonaqueous electrolyte secondary battery that adopts a negative electrode using a specific negative electrode active material, which is desired from the viewpoint of increasing capacity, it can exhibit at least one of an improvement in capacity retention rate after cycling and a suppression of the amount of gas generation during high-temperature storage, which could not be achieved conventionally.

That is, the electrolyte solution for a nonaqueous electrolyte secondary battery of the present disclosure provides an electrolyte solution for a nonaqueous electrolyte secondary battery that, when used in a nonaqueous electrolyte secondary battery including Si and/or silicon oxide as a negative electrode active material, can exhibit at least one of an improvement in capacity retention rate after cycling and a suppression of the amount of gas generation during high-temperature storage.

[Positive Electrode]

The positive electrode may include at least one selected from the group consisting of an oxide containing at least nickel and a phosphate salt containing nickel as a positive electrode active material.

[Positive Electrode Active Material]

In the case of a lithium-ion secondary battery where the cation in the nonaqueous electrolyte solution is mainly lithium, the positive electrode active material constituting the positive electrode is not particularly limited as long as it has at least one selected from the group consisting of an oxide containing nickel and a phosphate salt containing nickel and is any of various materials capable of charging and discharging; an example thereof is one containing at least one of (A) a lithium transition metal composite oxide containing nickel, or in addition to nickel, one or more metals selected from the group consisting of manganese, cobalt, and aluminum, and having a layered structure, (B) a lithium manganese composite oxide having a spinel structure and containing nickel, (C) a lithium-containing olivine-type phosphate containing nickel, and (D) a lithium-excess layered transition metal oxide having a layered rock-salt type structure and containing nickel.

((A) Lithium Transition Metal Composite Oxide)

Positive Electrode Active Material (A)

As the lithium transition metal composite oxide containing nickel, or in addition to nickel, one or more metals selected from the group consisting of manganese, cobalt, and aluminum, and having a layered structure, for example, a lithium-nickel composite oxide, a lithium-nickel-cobalt composite oxide, a lithium-nickel-cobalt-aluminum composite oxide, a lithium-nickel-manganese composite oxide, a lithium-nickel-manganese-cobalt composite oxide, and the like can be preferably exemplified. In addition, those in which a part of the transition metal atoms that are the main component of these lithium transition metal composite oxides is substituted with other elements such as Al, Ti, V, Cr, Fe, Cu, Zn, Mg, Ga, Zr, Si, B, Ba, Y, Sn may be used.

As a specific example of the lithium-nickel composite oxide, $LiNiO_2$, or one in which a part of the particle surface of lithium nickelate $LiNiO_2$ particle powder to which different elements such as Mg, Zr, Al, Ti are added is coated with aluminum oxide may be used.

Regarding the lithium-nickel-cobalt composite oxide and the lithium-nickel-cobalt-aluminum composite oxide, they are represented by the following general formula [1-1].

$$Li_aNi_{1-b-c}Co_bM^1_cO_2 \qquad [1\text{-}1]$$

In formula [1-1], $M^1$ is at least one element selected from the group consisting of Al, Fe, Mg, Zr, Ti, and B, a is $0.9 \leq a \leq 1.2$, and b and c satisfy the conditions of $0.1 \leq b \leq 0.3$ and $0 \leq c \leq 0.1$.

These can be prepared, for example, according to the production method described in Japanese Unexamined Patent Application Publication No. 2009-137834, etc. Specifically, $LiNi_{0.8}Co_{0.2}O_2$, $LiNi_{0.85}Co_{0.10}Al_{0.05}O_2$, $LiNi_{0.87}Co_{0.10}Al_{0.03}O_2$, $LiNi_{0.6}Co_{0.3}Al_{0.1}O_2$, and the like can be preferably exemplified.

As specific examples of the lithium-nickel-manganese composite oxide, $LiNi_{0.5}Mn_{0.5}O_2$, $LiCo_{0.5}Mn_{0.5}O_2$, and the like can be mentioned.

As the lithium-nickel-manganese-cobalt composite oxide, a lithium-containing composite oxide represented by the following general formula [1-2] can be mentioned.

$$Li_dNi_eMn_fCo_gM^2{}_hO_2 \qquad [1\text{-}2]$$

In formula [1-2], $M^2$ is at least one element selected from the group consisting of Al, Fe, Mg, Zr, Ti, B, and Sn, d is $0.9 \leq d \leq 1.2$, and e, f, g, and h satisfy the conditions of $e+f+g+h=1$, $0 \leq e \leq 0.9$, $0 \leq f \leq 0.5$, $0 \leq g \leq 0.5$, and $h \geq 0$.

The lithium-nickel-manganese-cobalt composite oxide preferably contains manganese in the range shown in general formula [1-2] to enhance structural stability and improve safety at high temperatures in a lithium secondary battery, and more preferably further contains cobalt in the range shown in general formula [1-2] to enhance the high-rate characteristics of the lithium-ion secondary battery.

Specifically, for example, $Li[Ni_{1/3}Mn_{1/3}Co_{1/3}]O_2$ (hereinafter, may be notated as "NCM111"), $Li[Ni_{0.45}Mn_{0.35}Co_{0.2}]O_2$, $Li[Ni_{0.5}Mn_{0.3}Co_{0.2}]O_2$, $Li[Ni_{0.6}Mn_{0.2}Co_{0.2}]O_2$ (hereinafter, may be notated as "NCM622"), $Li[Ni_{0.8}Mn_{0.1}Co_{0.1}]O_2$ (hereinafter, may be notated as "NCM811"), $Li[Ni_{0.49}Mn_{0.3}Co_{0.2}Zr_{0.01}]O_2$, $Li[Ni_{0.49}Mn_{0.3}Co_{0.2}Mg_{0.01}]O_2$, and the like, which have a charge/discharge region of 4.3 V or more, can be preferably exemplified.

((B) Lithium Manganese Composite Oxide Having a Spinel Structure)

Positive Electrode Active Material (B)

As the lithium manganese composite oxide having a spinel structure, for example, a spinel-type lithium manganese composite oxide represented by general formula [1-3] can be mentioned.

$$Li_j(Mn_{2-k}M^3{}_k)O_4 \qquad [1\text{-}3]$$

In formula [1-3], $M^3$ includes Ni, and may additionally include at least one metal element selected from the group consisting of Co, Fe, Mg, Cr, Cu, Al, and Ti. j is $1.05 \leq j \leq 1.15$, and k is $0 < k \leq 0.20$.

Specifically, for example, $LiMn_{1.9}Ni_{0.1}O_4$, $LiMn_{1.5}Ni_{0.5}O_4$, and the like can be mentioned.

((C) Lithium-Containing Olivine-Type Phosphate)

Positive Electrode Active Material (C)

As the lithium-containing olivine-type phosphate, for example, those represented by the following general formula [1-4] can be mentioned.

$$LiFe_{1-n}M^4{}_nPO_4 \qquad [1\text{-}4]$$

In formula [1-4], $M^4$ includes Ni, and may additionally include at least one selected from Co, Mn, Cu, Zn, Nb, Mg, Al, Ti, W, Zr, and Cd, and n is $0 < n \leq 1$.

Specifically, for example, $LiNiPO_4$ and the like can be preferably exemplified.

((D) Lithium-Excess Layered Transition Metal Oxide)

Positive Electrode Active Material (D)

As the lithium-excess layered transition metal oxide having a layered rock-salt type structure, for example, those represented by the following general formula [1-5] can be mentioned.

$$xLiM^5O_2 \cdot (1-x)Li_2M^6O_3 \qquad [1\text{-}5]$$

In formula [1-5], x is a number satisfying $0 < x < 1$, $M^5$ is at least one or more metal elements with an average

oxidation state of $3^+$, and $M^6$ is at least one metal element with an average oxidation state of $4^+$. In formula [1-5], $M^5$ is preferably one type of metal element selected from trivalent Mn, Ni, Co, Fe, V, and Cr, but the average oxidation state may be made trivalent with equal amounts of divalent and tetravalent metals.

In formula [1-5], $M^6$ is preferably one or more metal elements selected from Mn, Zr, and Ti. Note that either $M^5$ or $M^6$ must contain nickel. Specifically, $0.5[LiNi_{0.5}Mn_{0.5}O_2]\cdot 0.5[Li_2MnO_3]$, $0.5[LiNi_{1/3}Co_{1/3}Mn_{1/3}O_2]\cdot 0.5[Li_2MnO_3]$, $0.5[LiNi_{0.375}Co_{0.25}Mn_{0.375}O_2]\cdot 0.5[Li_2MnO_3]$, $0.5[LiNi_{0.375}CO_{0.125}Fe_{0.125}Mn_{0.375}O_2]\cdot 0.5[Li_2MnO_3]$, $0.45[LiNi_{0.375}Co_{0.25}Mn_{0.375}O_2]\cdot 0.10[Li_2TiO_3]0.45[Li_2MnO_3]$, and the like can be preferably exemplified.

The positive electrode active material (D) represented by the above general formula [1-5] is known to exhibit a high capacity upon high-voltage charging of 4.4 V (Li standard) or more (for example, US Patent 7,135,252).

These positive electrode active materials can be prepared, for example, according to the production methods described in Japanese Unexamined Patent Application Publication No. 2008-270201, WO2013/118661, Japanese Unexamined Patent Application Publication No. 2013-030284, etc.

The positive electrode active material may contain at least one selected from the above (A) to (D) as a main component, but as other components that may be included, for example, there can be mentioned transition element chalcogenides such as $FeS_2$, $TiS_2$, $TiO_2$, $V_2O_5$, $MoO_3$, $MoS_2$, or conductive polymers such as polyacetylene, polyparaphenylene, polyaniline, polypyrrole, activated carbon, polymers that generate radicals, carbon materials, and the like.

[Positive Electrode Current Collector]

The positive electrode has a positive electrode current collector. As the positive electrode current collector, for example, aluminum, stainless steel, nickel, titanium, or an alloy thereof can be used.

[Positive Electrode Active Material Layer]

The positive electrode, for example, has a positive electrode active material layer formed on at least one surface of the positive electrode current collector. The positive electrode active material layer is composed of, for example, the aforementioned positive electrode active material, a binder, and, if necessary, a conductive agent.

As the binder, there can be mentioned polytetrafluoroethylene, polyvinylidene fluoride, tetrafluoroethylene-perfluoroalkyl vinyl ether copolymer, styrene-butadiene rubber (SBR), carboxymethyl cellulose, methyl cellulose, cellulose acetate phthalate, hydroxypropyl methyl cellulose, polyvinyl alcohol, and the like.

As the conductive agent, for example, carbon materials such as acetylene black, Ketjenblack, furnace black, carbon fibers, graphite (particulate graphite or flaky graphite), and fluorinated graphite can be used. In the positive electrode, it is preferable to use carbon materials with low crystallinity such as acetylene black or Ketjenblack.

[Negative Electrode]

As the negative electrode active material, as described above, Si and/or silicon oxide (hereinafter, may be notated as "SiOx") is used. If necessary, graphite may be further used in combination.

Specifically, the negative electrode active material in the present disclosure includes Si and/or silicon oxide.

The silicon oxide is a compound represented as SiOx. Here, x has a value of 0.5 to 1.5. As the negative electrode active material, silicon metal may be used, or silicon oxide (SiOx) may be used.

When graphite is included as the negative electrode active material, the content of Si and/or silicon oxide included in the negative electrode active material is generally 0.1 to 50% by mass, and preferably 0.1 to 30% by mass, when the total amount of the Si and/or silicon oxide and graphite included in the negative electrode active material is taken as 100% by mass.

As the graphite to be used, various artificial graphites and natural graphites are used. Since graphite has very little change in crystal structure accompanying the occlusion and release of lithium, a high energy density can be obtained and excellent cycle characteristics can be obtained. The shape of the graphite may be fibrous, spherical, particulate, or flaky. Amorphous carbon or graphite coated with amorphous carbon on the surface is more preferable because the reactivity between the material surface and the electrolyte solution is low.

In the case of a lithium-ion secondary battery where the cation in the nonaqueous electrolyte solution is mainly lithium, the graphite is capable of doping and de-doping lithium ions, and examples include graphite with a d-value of the lattice plane (002 plane) in X-ray diffraction of 0.340 nm or less, and graphite with a d-value of the lattice plane (002 plane) in X-ray diffraction exceeding 0.340 nm. These negative electrode active materials can be used as one type alone, or two or more types can be used in combination.

[Negative Electrode Current Collector]

The negative electrode has a negative electrode current collector. As the negative electrode current collector, for example, copper, stainless steel, nickel, titanium, or an alloy thereof can be used.

[Negative Electrode Active Material Layer]

(C) The negative electrode, for example, has a negative electrode active material layer formed on at least one surface of the negative electrode current collector. The negative electrode active material layer is composed of, for example, the aforementioned negative electrode active material, a binder, and, if necessary, a conductive agent.

As the binder, there can be mentioned polytetrafluoroethylene, polyvinylidene fluoride, tetrafluoroethylene-perfluoroalkyl vinyl ether copolymer, styrene-butadiene rubber (SBR), carboxymethyl cellulose, methyl cellulose, cellulose acetate phthalate, hydroxypropyl methyl cellulose, polyvinyl alcohol, and the like.

As the conductive agent, for example, carbon materials such as acetylene black, Ketjenblack, furnace black, and carbon fibers can be used.

[Method for Manufacturing Electrodes (Positive Electrode and Negative Electrode)]

The electrodes can be obtained, for example, by dispersing and kneading the active material, a binder, and, if necessary, a conductive agent in a predetermined blend amount in a solvent such as N-methyl-2-pyrrolidone (NMP) or water, and applying the obtained paste to a current collector and drying it to form an active material layer. It is preferable to compress the obtained electrode by a method such as a roll press to adjust it to an electrode with an appropriate density.

[Separator]

The nonaqueous electrolyte battery of the present disclosure can be provided with a separator. As the separator for preventing contact between the positive electrode and the negative electrode, for example, nonwoven fabrics or porous sheets made of polyolefins such as polypropylene or polyethylene, cellulose, paper, glass fibers, etc. are used. It is preferable that these films have been made microporous so that the electrolyte solution can easily soak in and ions can permeate.

As the polyolefin separator, for example, there can be mentioned a membrane that electrically insulates the positive electrode and the negative electrode and is permeable to lithium ions, such as a microporous polymer film like a porous polyolefin film. As a specific example of the porous polyolefin film, for example, a porous polyethylene film may be used alone, or a porous polyethylene film and a porous polypropylene film may be stacked to be used as a multilayer film. In addition, a composite film of a porous polyethylene film and a polypropylene film, and the like can be mentioned.

The nonaqueous electrolyte solution of the present disclosure is impregnated into and held by the above-mentioned separator. The impregnation method is not particularly limited and may be carried out by a known method. Specifically, impregnation can be performed by finally injecting the electrolyte solution into a battery equipped with a positive electrode, a separator, and a negative electrode.

[Exterior Body]

In constituting the nonaqueous electrolyte secondary battery containing the electrolyte solution for a nonaqueous electrolyte secondary battery of the present disclosure, as the exterior body for the electrolyte solution for a nonaqueous electrolyte secondary battery, for example, metal cans such as coin-type, cylindrical-type, or prismatic-type, and furthermore, a laminate exterior body can be preferably used. As the metal can material, for example, nickel-plated steel plate, stainless steel plate, nickel-plated stainless steel plate, aluminum or its alloy, nickel, titanium, and the like can be preferably mentioned. As the laminate exterior body, for example, an aluminum laminate film, an SUS-made laminate film, a laminate film of polypropylene, polyethylene, etc., coated with silica can be used.

The constitution of the nonaqueous electrolyte secondary battery according to the present embodiment is not particularly limited, but for example, it can have a constitution in which an electrode element in which a positive electrode and a negative electrode are arranged opposite to each other, and a nonaqueous electrolyte solution are enclosed in an exterior body. The shape of the nonaqueous electrolyte secondary battery is not particularly limited, but an electrochemical device having a shape such as a coin shape, a cylindrical shape, a prismatic shape, or an aluminum laminate sheet type is assembled from the above elements.

The nonaqueous electrolyte secondary battery containing the electrolyte solution for a nonaqueous electrolyte secondary battery of the present disclosure can be manufactured, for example, by impregnating the above electrolyte solution for a nonaqueous electrolyte secondary battery into a separator, placing the separator between a positive

electrode having at least one selected from the group consisting of an oxide containing nickel and a phosphate salt as a positive electrode active material, and a negative electrode containing Si and/or silicon oxide (SiOx) as a negative electrode active material, and assembling a cell.

## Examples

Hereinafter, the present disclosure will be described in more specific detail by way of Examples, Comparative Examples, and Reference Examples, but the scope of the present disclosure is not limited in any way by these Examples, Comparative Examples, and Reference Examples.
In the following description, the specific comparative compounds used in the comparative examples are the following compounds. These compounds are referred to by the numbers described below their chemical formulas.

Comparative Example Compounds

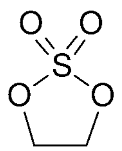

Comparative Compound 1-1

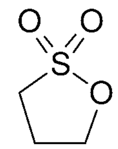

Comparative Compound 2-2

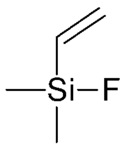

Comparative Compound 2-1

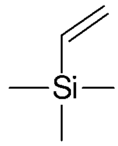

Comparative Compound 2-2

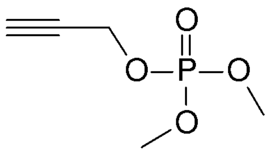

Comparative Compound 3-1

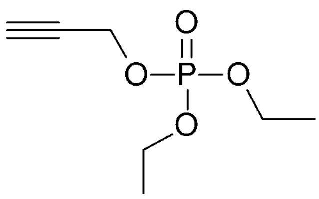

Comparative Compound 3-2

[Preparation of Nonaqueous Electrolyte Solutions of Examples and Comparative Examples]

<Comparative Example 1-1>

(Preparation of $LiPF_6$ Solution)

In a glove box with a dew point of -60°C or lower, EC, EMC, and DEC were mixed at a volume ratio of EC:EMC:DEC=3:5:2. Thereafter, while maintaining the internal temperature at 40°C or lower, an amount of $LiPF_6$ to achieve a concentration of 0.9 mol/L with respect to the total amount of the nonaqueous electrolyte solution, and an amount of FEC to achieve a concentration of 10.0% by mass with respect to the total amount of the nonaqueous electrolyte solution were added, and the mixture was stirred for 1 hour to dissolve them, thereby preparing Comparative Nonaqueous Electrolyte Solution 1-1.

<Example 1-1>

(Preparation of Nonaqueous Electrolyte Solution 1-1)

In a glove box with a dew point of -60°C or lower, EC, EMC, and DEC were mixed at a volume ratio of EC:EMC:DEC=3:5:2. Thereafter, while maintaining the internal temperature at 40°C or lower, an amount of $LiPF_6$ to achieve a concentration of 0.9 mol/L with respect to the total amount of the nonaqueous electrolyte solution, an amount of FEC to achieve a concentration of 10.0% by mass with respect to the total amount of the nonaqueous electrolyte solution, compound (1-1) corresponding to compound (1) to achieve a concentration of 0.5% by mass, and an amount of compound (2-3) corresponding to compound (2) to achieve a concentration of 0.5% by mass were added, and the mixture was stirred for 1 hour to dissolve them, thereby preparing Nonaqueous Electrolyte Solution 1-1 of Example 1-1.

<Examples 1-2 to 1-12>

(Preparation of Nonaqueous Electrolyte Solutions 1-2 to 1-12)

Nonaqueous Electrolyte Solutions 1-2 to 1-12 of the Examples were prepared in the same manner as the preparation of Nonaqueous Electrolyte Solution 1-1 of the Example, except that the types and contents of compound (1), compound (2), and the comparative compounds were changed as described in Table 1.

<Examples 2-1 to 2-20 and Comparative Example 2-1>

(Preparation of Nonaqueous Electrolyte Solutions 2-1 to 2-20 and Comparative Nonaqueous Electrolyte Solution 2-1)

Nonaqueous Electrolyte Solutions 2-1 to 2-20 of the Examples and Comparative Nonaqueous Electrolyte Solution 2-1 were prepared in the same manner as the preparation of Nonaqueous Electrolyte Solution 1-1 of the Example, except that the types and contents of compound (1), compound (3), and the comparative compounds were changed as described in Table 2.

<Comparative Example 3-1>

(Preparation of $LiPF_6$ Solution)

In a glove box with a dew point of -60°C or lower, EC, EMC, and DEC were mixed at a volume ratio of EC:EMC:DEC=3:5:2. Thereafter, while maintaining the internal temperature at 40°C or lower, an amount of $LiPF_6$ to achieve a concentration of 0.9 mol/L with respect to the total amount of the nonaqueous electrolyte solution, and an amount of FEC to achieve a concentration of 5.0% by mass with respect to the total amount of the nonaqueous electrolyte solution, and an amount of VC to achieve a concentration of 1.0% by mass were added, and the mixture was stirred for 1 hour to dissolve them, thereby preparing Comparative Nonaqueous Electrolyte Solution 3-1.

<Example 3-1>

(Preparation of Nonaqueous Electrolyte Solution 3-1)

In a glove box with a dew point of -60°C or lower, EC, EMC, and DEC were mixed at a volume ratio of EC:EMC:DEC=3:5:2. Thereafter, while maintaining the internal temperature at 40°C or lower, an amount of $LiPF_6$ to achieve a concentration of 0.9 mol/L with respect to the total amount of the nonaqueous electrolyte solution, FEC to achieve a concentration of 5.0% by mass with respect to the total amount of the nonaqueous electrolyte solution, an amount of VC to achieve a concentration of 1.0% by mass, an amount of compound (1-1) corresponding to compound (1) to achieve a concentration of 1.0% by mass, an amount of compound (2-3) corresponding to compound (2) to achieve a concentration of 0.5% by mass, and further as another additive, an amount of lithium difluorophosphate to achieve a concentration of 1.0% by mass were added, and the mixture was stirred for 1 hour to dissolve them, thereby preparing Nonaqueous Electrolyte Solution 3-1 of the Example.

<Examples 3-2 to 3-6>

(Preparation of Nonaqueous Electrolyte Solutions 3-2 to 3-6)

Nonaqueous Electrolyte Solutions 3-2 to 3-6 of the Examples were obtained in the same manner as the preparation of Nonaqueous Electrolyte Solution 3-1 of the Example, except that the types and contents of compound (1), compound (2), compound (3), or other additives/solutes were changed as described in Table 3 below. For reference, Table 3 also describes Examples 1-3V, 1-5V, and 1-6V, which used Nonaqueous Electrolyte Solutions 1-3V, 1-5V, and 1-6V, respectively, prepared using the "Other additives/solutes" shown in Table 3 instead of "Other additives" for Nonaqueous Electrolyte Solutions 1-3, 1-5, and 1-6 among the Nonaqueous Electrolyte Solutions of the Example 1 series.

For reference, Table 3 also describes Examples 2-3V, 2-5V, and 2-7V, which used Nonaqueous Electrolyte Solutions 2-3V, 2-5V, and 2-7V, respectively, prepared using the "Other additives/solutes" shown in Table 3 instead of "Other additives" for Nonaqueous Electrolyte Solutions 2-3, 2-5, and 2-7 among the Nonaqueous Electrolyte Solutions of the Example 2 series.

<Reference Example 4-1 and Comparative Example 4-1>

(Preparation of Comparative Nonaqueous Electrolyte Solution 4-1)

In a glove box with a dew point of -60°C or lower, EC, EMC, and DEC were mixed at a volume ratio of EC:EMC:DEC=3:5:2. Thereafter, while maintaining the internal temperature at 40°C or lower, an amount of $LiPF_6$ to achieve a concentration of 0.9 mol/L with respect to the total amount of the nonaqueous electrolyte solution, and an amount of FEC to achieve a concentration of 10.0% by mass with respect to the total amount of the nonaqueous electrolyte solution were added, and the mixture was stirred for 1 hour to dissolve them, thereby preparing Comparative Nonaqueous Electrolyte Solution 4-1.

<Example 4-1>

(Preparation of Nonaqueous Electrolyte Solution 4-1)

In a glove box with a dew point of -60°C or lower, EC, EMC, and DEC were mixed at a volume ratio of EC:EMC:DEC=3:5:2. Thereafter, while maintaining the internal temperature at 40°C or lower, an amount of $LiPF_6$ to achieve a concentration of 0.9 mol/L with respect to the total amount of the nonaqueous electrolyte solution, an amount of FEC to achieve a concentration of 10.0% by mass with respect to the total amount of the nonaqueous electrolyte solution, compound (1-1) corresponding to compound (1) to achieve a concentration of 0.5% by mass, and an amount of compound (2-12) corresponding to compound (2) to achieve a concentration of 0.5% by mass were added, and the mixture was stirred for 1 hour to dissolve them, thereby preparing Nonaqueous Electrolyte Solution 4-1 of the Example.

<Examples 4-2 to 4-3, Reference Examples 4-2 to 4-3 and Examples 4-2V to 4-3V>

(Preparation of Nonaqueous Electrolyte Solutions 4-2 to 4-3, and Nonaqueous Electrolyte Solutions 4-2V to 4-3V)

Nonaqueous Electrolyte Solutions 4-2 to 4-3 and Nonaqueous Electrolyte Solutions 4-2V to 4-3V were prepared in the same manner as the preparation of Nonaqueous Electrolyte Solution 4-1 of the Example, except that the types and contents of compound (1), compound (2), and/or compound (3) were changed as described in Table 4.

<Reference Example 4-4 and Example 4-4V>

(Preparation of Nonaqueous Electrolyte Solution 4-4V)

In a glove box with a dew point of -60°C or lower, EC, EMC, and DEC were mixed at a volume ratio of EC:EMC:DEC=3:5:2. Thereafter, while maintaining the internal temperature at 40°C or lower, an amount of $LiPF_6$ to achieve a concentration of 0.9 mol/L with respect to the total amount of the nonaqueous electrolyte solution, an amount of FEC to achieve a concentration of 10.0% by mass with respect to the total amount of the nonaqueous electrolyte solution, and an amount of VC to achieve a concentration of 0.5% by mass were added, and the mixture was stirred for 1 hour to dissolve them, thereby preparing Nonaqueous Electrolyte Solution 4-4V.

In Table 4 below, the Reference Examples are shown as being used in nonaqueous electrolyte secondary batteries containing a negative electrode that uses only graphite as the negative electrode active material.

<Example 4-4>

(Preparation of Nonaqueous Electrolyte Solution 4-4)

In a glove box with a dew point of -60°C or lower, EC, EMC, and DEC were mixed at a volume ratio of EC:EMC:DEC=3:5:2. Thereafter, while maintaining the internal temperature at 40°C or lower, an amount of $LiPF_6$ to achieve a concentration of 0.9 mol/L with respect to the total amount of the nonaqueous electrolyte solution, FEC to achieve a concentration of 10.0% by mass with respect to the total amount of the nonaqueous electrolyte solution, an amount of compound (1-1) corresponding to compound (1) to achieve a concentration of 1.0% by mass, an amount of compound (2-3) corresponding to compound (2) to achieve a concentration of 0.5% by mass, and further as another additive, an amount of VC to achieve a concentration of 0.5% by mass were added, and the mixture was stirred for 1 hour to dissolve them, thereby preparing Nonaqueous Electrolyte Solution 4-4.

<Examples 4-5 to 4-7>

(Preparation of Nonaqueous Electrolyte Solutions 4-5 to 4-7)

Nonaqueous Electrolyte Solutions 4-5 to 4-7 were prepared in the same manner as the preparation of Nonaqueous Electrolyte Solution 4-4, except that the type of compound (2) or compound (3) was changed as described in Table 4.

[Production of Nonaqueous Electrolyte Battery]

(Production of NCM811 Positive Electrode)

To 92.0% by mass of $LiNi_{0.8}Co_{0.1}Mn_{0.1}O_2$ powder, 3.5% by mass of polyvinylidene fluoride (hereinafter, also referred to as PVDF) as a binder and 4.5% by mass of acetylene black as a conductive material were mixed, and N-methyl-2-pyrrolidone was further added to produce a positive electrode mixture paste. This paste was coated on both sides of an aluminum foil (A1085), dried and pressed, and then punched into 4 cm×5 cm pieces to obtain an NCM811 positive electrode for testing.

(Production of NCM622 Positive Electrode)

To 90.0% by mass of $LiNi_{0.6}Co_{0.2}Mn_{0.2}O_2$ powder, 5.0% by mass of PVDF as a binder and 5.0% by mass of acetylene black as a conductive material were mixed, and N-methyl-2-pyrrolidone was further added to produce a positive electrode mixture paste. This paste was coated on both sides of an aluminum foil (A1085), dried and pressed, and then punched into 4 cm×5 cm pieces to obtain an NCM622 positive electrode for testing.

(Production of NCM111 Positive Electrode)

To 90.0% by mass of $Li[Ni_{1/3}Mn_{1/3}Co_{1/3}]O_2$ powder, 5.0% by mass of PVDF as a binder and 5.0% by mass of acetylene black as a conductive material were mixed, and N-methyl-2-pyrrolidone was further added to produce a positive electrode mixture paste. This paste was coated on both sides of an aluminum foil (A1085), dried and pressed, and then punched into 4 cm×5 cm pieces to obtain an NCM111 positive electrode for testing.

(Production of Silicon-Containing Graphite Negative Electrode (notated as "Graphite + $SiO_x$" in the tables) used in experiments related to Tables 1, 2, and 4)

72.0% by mass of artificial graphite powder, 20.0% by mass of $SiO_x$ (x=1), 3.0% by mass of a conductive material (HS-100), 2.0% by mass of carbon nanofibers (VGCF), 2.0% by mass of styrene-butadiene rubber, and 1.0% by mass of sodium carboxymethyl cellulose were mixed with water to produce a negative electrode mixture paste. This paste was coated on one side of a copper foil, dried and pressed, and then punched into 4 cm×5 cm pieces to obtain a silicon-containing graphite negative electrode for testing.

(Production of Silicon-Containing Graphite Negative Electrode (notated as "Graphite + $SiO_x$" in the tables) used in experiments related to Table 3)

82.0% by mass of artificial graphite powder, 10.0% by mass of $SiO_x$ (x=1), 3.0% by mass of a conductive material (HS-100), 2.0% by mass of carbon nanofibers (VGCF), 2.0% by mass of styrene-butadiene rubber, and 1.0% by mass of sodium carboxymethyl cellulose were mixed with water to produce a negative electrode mixture paste. This paste was

coated on one side of a copper foil, dried and pressed, and then punched into 4 cm×5 cm pieces to obtain a silicon-containing graphite negative electrode for testing.

(Production of Graphite Negative Electrode (notated as "Graphite" in the tables))

98.0% by mass of artificial graphite powder, 1.0% by mass of styrene-butadiene rubber, and 1.0% by mass of carboxymethyl cellulose were mixed with water to produce a negative electrode mixture paste. This paste was coated on one side of a copper foil, dried and pressed, and then punched into 4 cm×5 cm pieces to obtain a graphite negative electrode for testing.

(Production of Nonaqueous Electrolyte Battery)

In an argon atmosphere with a dew point of -50°C or lower, a terminal was welded to the aforementioned NCM811 positive electrode, NCM622 positive electrode, or NCM111 positive electrode, after which both sides thereof were sandwiched by two sheets of polyethylene separator (5 cm×6 cm), and further, the outside thereof was sandwiched by two silicon-containing graphite negative electrodes, or by two graphite negative electrodes to which terminals had been welded in advance, such that the negative electrode active material surfaces faced the positive electrode active material surfaces. Then, these were placed in an aluminum laminate bag with one side left open, a nonaqueous electrolyte solution was injected under vacuum, and the opening was sealed by heat, thereby producing aluminum laminate type nonaqueous electrolyte batteries of the Examples and Comparative Examples. As the nonaqueous electrolyte solution used, those described in Tables 1 to 4 were used.

Using the cells produced by the method as described above, the cycle characteristics and the amount of gas generated during high-temperature storage were evaluated by the methods described later.

[Evaluation of Nonaqueous Electrolyte Battery]

<Cycle Characteristic Test>

A charge-discharge test at an environmental temperature of 25°C was conducted to evaluate the cycle characteristics. As initial conditioning, charging was performed up to 4.2 V and discharging was performed down to 2.5 V, and charge-discharge cycles were performed at a current density of 1.9 $mA/cm^2$. This was taken as one cycle, and the battery was stabilized by performing a total of 3 charge-discharge cycles. Thereafter, the discharge capacity measured in the 4th cycle was taken as the initial charge-discharge capacity. Thereafter, charging was performed up to 4.2 V and discharging was performed down to 2.5 V, and charge-discharge cycles were repeated for about 500 cycles at a current density of 1.9 $mA/cm^2$, and the degree of deterioration of the cell was evaluated by the discharge capacity retention rate after 500 cycles. The discharge capacity retention rate after 500 cycles was determined by the following formula.

(Discharge Capacity Retention Rate after 500 Cycles)

Discharge capacity retention rate (%) = (Discharge capacity after 500 cycles) × 100/(Initial charge-discharge capacity)

The numerical values of the discharge capacity retention rate after 500 cycles for all Examples described in Table 1 are relative values when the discharge capacity retention rate after 500 cycles of Comparative Example 1-1 is taken as 100. The numerical values of the discharge capacity retention rate after 500 cycles described for all Examples in Table 2 are relative values when the discharge capacity retention rate after 500 cycles of Comparative Example 2-1 is taken as 100. The numerical values of the discharge capacity retention rate after 500 cycles described for all Examples in Table 3 are relative values when the discharge capacity retention rate after 500 cycles of Comparative Example 3-1 is taken as 100. The numerical values of the discharge capacity retention rate after 500 cycles described for all Examples in Table 4 are relative values when the discharge capacity retention rate after 500 cycles of Comparative Example 4-1 is taken as 100. The numerical values of the discharge capacity retention rate after 500 cycles described for all Reference Examples in Table 4 are relative values when the discharge capacity retention rate after 500 cycles of Reference Example 4-1 is taken as 100.

<Amount of Gas Generated during High-Temperature Storage (80°C)>

At an environmental temperature of 25°C, the battery was charged to a charge upper limit voltage of 4.2 V by a constant current-constant voltage method at a current density of 0.38 $mA/cm^2$, and then stored for 10 days at an environmental temperature of 80°C. The volume of the battery was measured before and after storage, and the difference was taken as the amount of gas generated.

The numerical values of the amount of gas generated for all Examples described in Table 1 are relative values when the amount of gas generated of Comparative Example 1-1 is taken as 100. The numerical values of the amount of gas generated for all Examples in Table 2 are relative values when the amount of gas generated of Comparative Example 2-1 is taken as 100. The numerical values of the amount of gas generated for all Examples in Table 3 are relative values when the amount of gas generated of Comparative Example 3-1 is taken as 100. The numerical values of the amount of gas generated for all Examples in Table 4 are relative values when the amount of gas generated of Comparative Example 4-1 is taken as 100. The numerical values of the amount of gas generated for all Reference Examples in Table 4 are relative values when the amount of gas generated of Reference Example 4-1 is taken as 100.

According to the results shown in Table 1 below, it was confirmed that when compound (1) and compound (2) are used in combination (Examples 1-1 to 1-8), in a nonaqueous electrolyte secondary battery containing Si and/or silicon oxide (SiOx) as the negative electrode active material, the capacity retention rate after cycling can be improved and the amount of gas generation during high-temperature storage can be suppressed. In particular, it is understood that even when compound (1) is used alone (Examples 1-9 and 1-10), at least the capacity retention rate after cycling can be improved. The same was true when compound (1) was used in combination with a comparative compound different from compound (2) (Examples 1-11 and 1-12). Although the detailed mechanism is unknown, it is presumed that this is because the sulfate ester compound (1) having a bicyclic structure decomposes during charge and discharge, thereby forming a good quality film on the surface of the negative electrode.

In the present disclosure, graphite is not necessarily an essential material as the negative electrode active material. For example, a "negative electrode including Si as a negative electrode active material" formed using Si powder, as described in paragraph 0094 of Japanese Unexamined Patent Application Publication No. 2022-191483, may be applied to the present disclosure.

Table 1

| | Nonaqueous electrolyte solution | Compound (1) | | Compound (2) | | Other additives | | Positive electrode active material | Negative electrode active material | Discharge capacity retention rate after 500 cycles | Amount of gas generation after storage at 80°C |
|---|---|---|---|---|---|---|---|---|---|---|---|
| | | Type | Content [mass%] | Type | Content [mass%] | Type | Content [mass%] | | | | |
| Example 1-1 | Nonaqueous electrolyte solution 1-1 | | 0.5 | | 0.5 | | | | | 111 | 83 |
| Example 1-2 | Nonaqueous electrolyte solution 1-2 | | 0.5 | (2-3) | 1.0 | | | | | 109 | 80 |
| Example 1-3 | Nonaqueous electrolyte solution 1-3 | | 1.0 | | 0.5 | | | | | 117 | 82 |
| Example 1-4 | Nonaqueous electrolyte solution 1-4 | (1-1) | 1.0 | | 1.0 | | | | | 116 | 81 |
| Example 1-5 | Nonaqueous electrolyte solution 1-5 | | 1.0 | (2-5) | 0.5 | | | | | 117 | 83 |
| Example 1-6 | Nonaqueous electrolyte solution 1-6 | | 1.0 | (2-12) | 0.5 | | | | | 118 | 82 |
| Example 1-7 | Nonaqueous electrolyte solution 1-7 | | 1.0 | (2-17) | 0.5 | | | | Graphite +SiOx | 114 | 87 |
| Example 1-8 | Nonaqueous electrolyte solution 1-8 | (1-2) | 1.0 | (2-12) | 0.5 | FEC | 10.0 | NCM 811 | | 117 | 82 |
| Comparative Example 1-1 | Comparative nonaqueous electrolyte solution 1-1 | - | - | - | - | | | | | 100 | 100 |
| Example 1-9 | Nonaqueous electrolyte solution 1-9 | (1-1) | 1.0 | - | - | | | | | 114 | 106 |
| Example 1-10 | Nonaqueous electrolyte solution 1-10 | (1-2) | 1.0 | - | - | | | | | 113 | 107 |
| Example 1-11 | Nonaqueous electrolyte solution 1-11 | (1-1) | 1.0 | Comparative Compound (2-1) | 0.5 | | | | | 114 | 106 |
| Example 1-12 | Nonaqueous electrolyte solution 1-12 | | 1.0 | Comparative Compound (2-2) | 0.5 | | | | | 115 | 105 |

According to the results described in Table 2 below, when compound (1) and compound (3) are used in combination (Examples 2-1 to 2-8), it was confirmed that in a nonaqueous electrolyte secondary battery containing a negative electrode that contains Si and/or silicon oxide (SiOx) as a negative electrode active material, the capacity retention rate after cycling can be improved and the amount of gas generation during high-temperature storage can be suppressed. It is also understood that when compound (1) is used alone (Examples 2-9 and 2-10), or when compound (1) is used in combination with a comparative compound different from compound (3) (Examples 2-19 and 2-20), at least the capacity retention rate after cycling can be improved.

Furthermore, it is understood that even when compound (3) is used alone (Examples 2-11 to 2-14), at least the suppression of the amount of gas generation during high-temperature storage is improved. This situation was similar when compound (3) was used in combination with a sulfate ester compound having a structure that deviates from the structure of compound (1) (does not have a spiro structure) (Examples 2-15 to 2-18). Accordingly, it is understood that even compound (3) alone can exhibit at least one of an improvement in capacity retention rate after cycling and a suppression of the amount of gas generation during high-temperature storage.

Table 2

| | Nonaqueous electrolyte solution | Compound (1) | | Compound (3) | | Other additives | | Positive electrode active material | Negative electrode active material | Discharge capacity retention rate after 500 cycles | Amount of gas generation after storage at 80°C |
|---|---|---|---|---|---|---|---|---|---|---|---|
| | | Type | Content [mass%] | Type | Content [mass%] | Type | Content [mass%] | | | | |
| Example 2-1 | Nonaqueous electrolyte solution 2-1 | (1-1) | 0.5 | (3-1) | 0.5 | FEC | 10.0 | NCM 811 | Graphite +SiOx | 112 | 83 |
| Example 2-2 | Nonaqueous electrolyte solution 2-2 | | 0.5 | | 1.0 | | | | | 110 | 80 |
| Example 2-3 | Nonaqueous electrolyte solution 2-3 | | 1.0 | | 0.5 | | | | | 117 | 84 |
| Example 2-4 | Nonaqueous electrolyte solution 2-4 | | 1.0 | | 1.0 | | | | | 114 | 80 |
| Example 2-5 | Nonaqueous electrolyte solution 2-5 | | 1.0 | (3-2) | 0.5 | | | | | 116 | 83 |
| Example 2-6 | Nonaqueous electrolyte solution 2-6 | | 1.0 | (3-3) | 0.5 | | | | | 117 | 83 |
| Example 2-7 | Nonaqueous electrolyte solution 2-7 | | 1.0 | (3-4) | 0.5 | | | | | 119 | 81 |
| Example 2-8 | Nonaqueous electrolyte solution 2-8 | (1-2) | 1.0 | (3-4) | 0.5 | | | | | 118 | 81 |
| Comparative Example 2-1 | Comparative nonaqueous electrolyte solution 2-1 | - | - | - | - | | | | | 100 | 100 |
| Example 2-9 | Nonaqueous electrolyte solution 2-9 | (1-1) | 1.0 | - | - | | | | | 114 | 106 |
| Example 2-10 | Nonaqueous electrolyte solution 2-10 | (1-2) | 1.0 | - | - | | | | | 113 | 107 |
| Example 2-11 | Nonaqueous electrolyte solution 2-11 | - | - | (3-1) | 0.5 | | | | | 97 | 86 |
| Example 2-12 | Nonaqueous electrolyte solution 2-12 | - | - | (3-2) | 0.5 | | | | | 96 | 86 |

(continued)

| | Nonaqueous electrolyte solution | Compound (1) | | Compound (3) | | Other additives | | Positive electrode active material | Negative electrode active material | Discharge capacity retention rate after 500 cycles | Amount of gas generation after storage at 80°C |
|---|---|---|---|---|---|---|---|---|---|---|---|
| | | Type | Content [mass%] | Type | Content [mass%] | Type | Content [mass%] | | | | |
| Example 2-13 | Nonaqueous electrolyte solution 2-13 | - | - | (3-3) | 0.5 | | | | | 95 | 85 |
| Example 2-14 | Nonaqueous electrolyte solution 2-14 | - | - | (3-4) | 0.5 | | | | | 96 | 84 |
| Example 2-15 | Nonaqueous electrolyte solution 2-15 | Comparative Compound (1-1) | 1.0 | (3-4) | 0.5 | | | | | 83 | 85 |
| Example 2-16 | Nonaqueous electrolyte solution 2-16 | | 1.0 | (3-1) | 0.5 | | | | | 83 | 86 |
| Example 2-17 | Nonaqueous electrolyte solution 2-17 | Comparative Compound (1-2) | 1.0 | (3-4) | 0.5 | | | | | 85 | 85 |
| Example 2-18 | Nonaqueous electrolyte solution 2-18 | | 1.0 | (3-2) | 0.5 | | | | | 84 | 84 |
| Example 2-19 | Nonaqueous electrolyte solution 2-19 | (1-1) | 1.0 | Comparative Compound (3-1) | 0.5 | | | | | 113 | 104 |
| Example 2-20 | Nonaqueous electrolyte solution 2-20 | | 1.0 | Comparative Compound (3-2) | 0.5 | | | | | 114 | 106 |

According to the results described in Table 3 below, by using compound (1), compound (2) and/or compound (3), and further, lithium difluorophosphate, lithium difluorobis(oxalato)phosphate, or lithium bis(difluorophosphoryl)imide as other additives or additional solutes in combination, a further improvement in the capacity retention rate after cycling was confirmed in comparison with the respective Examples not blended with such additives.

By using compound (1), compound (2) and/or compound (3), and further, lithium fluorosulfate, lithium (difluorophosphoryl)(fluorosulfonyl)imide, or lithium bis(fluorosulfonyl)imide as other additives or additional solutes in combination, a further reduction in the amount of gas generated during high-temperature storage was confirmed in comparison with the respective Examples not blended with such additives.

Table 3

| | Nonaqueous electrolyte solution | Compound (1) | | Compound (2)/Compound (3) | | Other additives·solutes | | Positive electrode active material | Negative electrode active material | Discharge capacity retention rate after 500 cycles | Amount of gas generation after storage at 80°C |
|---|---|---|---|---|---|---|---|---|---|---|---|
| | | Type | Content [mass%] | Type | Content [mass%] | Type | Content [mass%] | | | | |
| Example 1-3V | Nonaqueous electrolyte solution 1-3V | (1-1) | 1.0 | (2-3) | 0.5 | FEC<br>VC | 5.0<br>1.0 | NCM 622 | Graphite +SiOx | 116 | 83 |
| Example 3-1 | Nonaqueous electrolyte solution 3-1 | | | | | FEC<br>VC<br>Lithium difluorophosphate | 5.0<br>1.0<br>1.0 | | | 120 | 83 |
| Example 1-5V | Nonaqueous electrolyte solution 1-5V | | | (2-5) | 0.5 | FEC<br>VC | 5.0<br>1.0 | | | 116 | 82 |
| Example 3-2 | Nonaqueous electrolyte solution 3-2 | | | | | FEC<br>VC<br>Lithium fluorosulfate | 5.0<br>1.0<br>1.0 | | | 116 | 79 |
| Example 1-6V | Nonaqueous electrolyte solution 1-5V | | | (2-12) | 0.5 | FEC<br>VC | 5.0<br>1.0 | | | 117 | 82 |
| Example 3-3 | Nonaqueous electrolyte solution 3-3 | | | | | FEC<br>VC<br>Lithium difluorobis(oxalato)phosphate | 5.0<br>1.0<br>1.0 | | | 121 | 83 |
| Example 2-3V | Nonaqueous electrolyte solution 2-3V | | | (3-1) | 0.5 | FEC<br>VC | 5.0<br>1.0 | | | 116 | 83 |
| Example 3-4 | Nonaqueous electrolyte solution 3-4 | | | | | FEC<br>VC<br>Lithium bis(difluorophosphoryl) imide | 5.0<br>1.0<br>1.0 | | | 120 | 84 |

(continued)

| | Nonaqueous electrolyte solution | Compound (1) | | Compound (2)/Compound (3) | | Other additives·solutes | | Positive electrod e active material | Negative electrode active material | Discharge capacity retention rate after 500 cycles | Amount of gas generation after storage at 80°C |
|---|---|---|---|---|---|---|---|---|---|---|---|
| | | Type | Content [mass%] | Type | Content [mass%] | Type | Content [mass%] | | | | |
| Example 2-5V | Nonaqueous electrolyte solution 2-5V | | | (3-2) | 0.5 | FEC<br>VC | 5.0<br>1.0 | | | 116 | 84 |
| Example 3-5 | Nonaqueous electrolyte solution 3-5 | | | | | FEC<br>VC<br>Lithium (difluoropho-sphoryl) (fluorosulfonyl) imide | 5.0<br>1.0<br>1.0 | | | 116 | 78 |
| Example 2-7V | Nonaqueous electrolyte solution 2-7V | | | (3-4) | 0.5 | FEC<br>VC | 5.0<br>1.0 | | | 118 | 82 |
| Example 3-6 | Nonaqueous electrolyte solution 3-6 | | | | | FEC<br>VC<br>Lithium bis(fluorosulfo-nyl)imide | 5.0<br>1.0<br>1.0 | | | 119 | 77 |
| Comparative Example 3-1 | Comparative nonaqueous electrolyte solution 3-1 | - | - | - | - | FEC<br>VC | 5.0<br>1.0 | | | 100 | 100 |

From the results described in Table 4 below, in Nonaqueous Electrolyte Solutions 4-2V to 4-4V containing compound (1) alone, it was confirmed that when used in a nonaqueous electrolyte secondary battery that uses graphite as the negative electrode active material, as in Reference Examples 4-2 to 4-4, an effect of improving the capacity retention rate after cycling and an effect of suppressing the amount of gas generation during high-temperature storage are exhibited, but it is also understood that even when used in a nonaqueous electrolyte secondary battery that uses Si and/or silicon oxide (SiOx) and graphite as the negative electrode active material, at least the capacity retention rate after cycling can be improved. It was also confirmed that when compound (1) and compound (2) and/or compound (3) are used in combination, the capacity retention rate after cycling can be improved, and the amount of gas generation during high-temperature storage can be suppressed. That is, it was confirmed that when compound (1) and compound (2) and/or compound (3) are used in combination, in cases where Si and/or silicon oxide is contained as the negative electrode active material, the effects of both the improvement in capacity retention rate after cycling and the suppression of the amount of gas generation during high-temperature storage can be improved. Although the detailed mechanism is unknown, it is presumed that this is because, in cases where Si and/or silicon oxide is contained as the negative electrode active material, compound (1) having a spiro structure and compound (2) or compound (3) having a plurality of groups with an unsaturated bond co-decompose during charge and discharge, thereby forming a good quality film on the surface of the negative electrode.

Table 4

| | Nonaqueous electrolyte solution | Compound (1) | | Compound (2)/Compound (3) | | Other additives | | Positive electrode active material | Negative electrode active material | Discharge capacity retention rate after 500 cycles | Amount of gas generation after storage at 80°C |
|---|---|---|---|---|---|---|---|---|---|---|---|
| | | Type | Content [mass%] | Type | Content [mass%] | Type | Content [mass%] | | | | |
| Reference Example 4-1 | Comparative nonaqueous electrolyte solution 4-1 | - | - | - | - | FEC | 10.0 | NCM111 | Graphite | 100 | 100 |
| Comparative Example 4-1 | | | | | | | | NCM811 | Graphite +SiOx | 100 | 100 |
| Reference Example 4-2 | Nonaqueous electrolyte solution 4-2V | (1-1) | 0.5 | - | - | FEC | 10.0 | NCM111 | Graphite | 111 | 84 |
| Example 4-2V | | | | - | - | | | NCM811 | Graphite +SiOx | 111 | 106 |
| Example 1-1 | Nonaqueous electrolyte solution 1-1 | | | (2-3) | 0.5 | | | | | 111 | 83 |
| Example 4-1 | Nonaqueous electrolyte solution 4-1 | | | (2-12) | 0.5 | | | | | 112 | 82 |
| Example 2-1 | Nonaqueous electrolyte solution 2-1 | | | (3-1) | 0.5 | | | | | 112 | 83 |
| Example 4-2 | Nonaqueous electrolyte solution 4-2 | | | (3-4) | 0.5 | | | | | 112 | 82 |

(continued)

| | Nonaqueous electrolyte solution | Compound (1) | | Compound (2)/Compound (3) | | Other additives | | Positive electrode active material | Negative electrode active material | Discharge capacity retention rate after 500 cycles | Amount of gas generation after storage at 80°C |
|---|---|---|---|---|---|---|---|---|---|---|---|
| | | Type | Content [mass%] | Type | Content [mass%] | Type | Content [mass%] | | | | |
| Reference Example 4-3 | Nonaqueous electrolyte solution 4-3V | (1-1) | 1.0 | | | FEC | 10.0 | NCM111 | Graphite | 114 | 84 |
| Example 4-3V | | | | | | | | NCM811 | Graphite +SiOx | 114 | 106 |
| Example 1-3 | Nonaqueous electrolyte solution 1-3 | | | (2-3) | 0.5 | | | | | 117 | 82 |
| Example 1-6 | Nonaqueous electrolyte solution 1-6 | | | (2-12) | 0.5 | | | | | 118 | 82 |
| Example 2-3 | Nonaqueous electrolyte solution 2-3 | | | (3-1) | 0.5 | | | | | 117 | 84 |
| Example 2-7 | Nonaqueous electrolyte solution 2-7 | | | (3-4) | 0.5 | | | | | 119 | 81 |
| Example 4-3 | Nonaqueous electrolyte solution 4-3 | | | (2-12) (3-4) | 0.25 0.25 | | | | | 118 | 81 |
| Reference Example 4-4 | Nonaqueous electrolyte solution 4-4V | (1-1) | 1.0 | | | FEC VC | 10.0 0.5 | NCM111 | Graphite | 116 | 82 |
| Example 4-4V | | | | | | | | NCM811 | Graphite +SiOx | 116 | 107 |
| Example 4-4 | Nonaqueous electrolyte solution 4-4 | | | (2-3) | 0.5 | | | | | 117 | 81 |
| Example 4-5 | Nonaqueous electrolyte solution 4-5 | | | (2-12) | 0.5 | | | | | 118 | 79 |
| Example 4-6 | Nonaqueous electrolyte solution 4-6 | | | (3-1) | 0.5 | | | | | 117 | 82 |
| Example 4-7 | Nonaqueous electrolyte solution 4-7 | | | (3-4) | 0.5 | | | | | 119 | 80 |

**Claims**

1. A nonaqueous electrolyte solution for a nonaqueous electrolyte secondary battery containing a negative electrode that includes Si and/or silicon oxide as a negative electrode active material, comprising

(I) a nonaqueous organic solvent,
(II) a solute that is an ionic salt, and,
(III) a compound represented by the following formula (1):

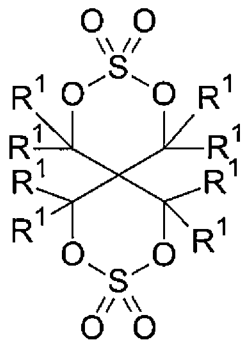

(1)

wherein in general formula (1), $R^1$ each independently represents a hydrogen atom, a halogen atom, or a linear alkyl group having 1 to 12 carbon atoms or a branched alkyl group having 3 to 12 carbon atoms, an oxygen atom may be included between carbon-carbon bonds in the alkyl group, and any hydrogen atom of the alkyl group may be substituted with a fluorine atom.

2. A nonaqueous electrolyte solution for a nonaqueous electrolyte secondary battery containing a negative electrode that includes Si and/or silicon oxide as a negative electrode active material, comprising

(I) a nonaqueous organic solvent,
(II) a solute that is an ionic salt, and,
(IV) a compound represented by the following formula (3):

$$PO(OR^4)_y(OR^5)_{3-y} \quad (3)$$

wherein in general formula (3), $R^4$ each independently represents an alkenyl group or an alkynyl group, $R^5$ represents an alkyl group or an aryl group, a hydrogen atom of these groups may be substituted with a fluorine atom, and y is an integer of 2 to 3.

3. A nonaqueous electrolyte solution for a nonaqueous electrolyte secondary battery containing a negative electrode that includes Si and/or silicon oxide as a negative electrode active material, comprising

(I) a nonaqueous organic solvent,
(II) a solute that is an ionic salt,
(III) a compound represented by the following formula (1), and,
(V) a compound represented by the following formula (2) and/or a compound represented by the following formula (3):

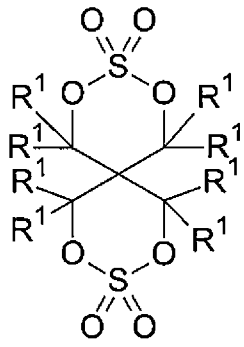

( 1 )

wherein in general formula (1), $R^1$ each independently represents a hydrogen atom, a halogen atom, or a linear alkyl group having 1 to 12 carbon atoms or a branched alkyl group having 3 to 12 carbon atoms, an oxygen atom may be included between carbon-carbon bonds in the alkyl group, and any hydrogen atom of the alkyl group may be substituted with a fluorine atom,

$$Si(R^2)_x(R^3)_{4-x} \quad (2)$$

wherein in general formula (2), $R^2$ each independently represents an alkenyl group or an alkynyl group, $R^3$ each independently represents a group selected from the group consisting of a fluorine atom, an alkyl group, an alkoxy group, an aryl group, and an aryloxy group, a hydrogen atom of these groups may be substituted with a fluorine atom, and x is an integer of 2 to 4, and

$$PO(OR^4)_y(OR^5)_{3-y} \quad (3)$$

wherein in general formula (3), $R^4$ each independently represents an alkenyl group or an alkynyl group, $R^5$ represents an alkyl group or an aryl group, a hydrogen atom of these groups may be substituted with a fluorine atom, and y is an integer of 2 to 3.

**4.** The nonaqueous electrolyte solution according to claim 1 or 3, wherein at least one of the eight $R^1$ is a hydrogen atom.

**5.** The nonaqueous electrolyte solution according to claim 3, wherein $R^2$ is a group selected from the group consisting of a vinyl group, a 2-propenyl group, a 1-propenyl group, an ethynyl group, and a 2-propynyl group, each independently, and $R^3$ is a group selected from the group consisting of a fluorine atom, a methyl group, an ethyl group, a propyl group, a 2,2,2-trifluoroethyl group, a 2,2,3,3-tetrafluoropropyl group, a 1,1,1-trifluoroisopropyl group, a 1,1,1,3,3,3-hexafluoroisopropyl group, a 2,2,2-trifluoroethoxy group, a 2,2,3,3-tetrafluoropropoxy group, a 2,2,3,3,3-pentafluoropropoxy group, a 1,1,1-trifluoroisopropoxy group, and a 1,1,1,3,3,3-hexafluoroisopropoxy group, each independently.

**6.** The nonaqueous electrolyte solution according to claim 3 or 5, wherein at least one of the x $R^2$ groups is a vinyl group, and at least one of the (4-x) $R^3$ groups is a methyl group or a fluorine atom.

**7.** The nonaqueous electrolyte solution according to claim 3, wherein x is 3 or 4.

**8.** The nonaqueous electrolyte solution according to claim 2 or 3, wherein $R^4$ is a group selected from the group consisting of a 1-propenyl group, a 2-propenyl group, an ethynyl group, a 2-propynyl group, and a 2-butynyl group, each independently, and $R^5$ is an alkyl group.

**9.** The nonaqueous electrolyte solution according to claim 2, 3 or 8, wherein $R^4$ is a group selected from the group consisting of a 2-propenyl group, a 2-propynyl group, and a 2-butynyl group, each independently, and $R^5$ is a methyl group or an ethyl group.

**10.** The nonaqueous electrolyte solution according to claim 2 or 3, wherein y is 3.

**11.** The nonaqueous electrolyte solution according to claim 1 or 3, wherein the concentration of the compound represented by formula (1) is 0.1 to 5% by mass with respect to the total amount of the nonaqueous electrolyte solution.

**12.** The nonaqueous electrolyte solution according to claim 2 or 3, wherein the concentration of the compound represented by formula (3) is 0.01 to 5% by mass with respect to the total amount of the nonaqueous electrolyte solution.

**13.** The nonaqueous electrolyte solution according to claim 3, wherein the concentration of the compound represented by formula (2) is 0.01 to 5% by mass with respect to the total amount of the nonaqueous electrolyte solution.

**14.** The nonaqueous electrolyte solution according to any one of claims 1 to 13, wherein the negative electrode active material further comprises graphite.

**15.** The nonaqueous electrolyte solution according to claim 14, wherein the content of the Si and/or silicon oxide is 0.1 to 50% by mass with respect to the total amount of the Si and/or silicon oxide and graphite included in the negative electrode active material.

**16.** The nonaqueous electrolyte solution according to any one of claims 1 to 15, wherein the nonaqueous organic solvent is at least one selected from the group consisting of a cyclic ester, a chain ester, a cyclic ether, a chain ether, a sulfone compound, and a sulfoxide compound.

**17.** The nonaqueous electrolyte solution according to claim 16, wherein the cyclic ester is a cyclic carbonate.

**18.** The nonaqueous electrolyte solution according to claim 16, wherein the chain ester is a chain carbonate.

**19.** The nonaqueous electrolyte solution according to any one of claims 1 to 15, wherein the nonaqueous organic solvent is at least one selected from the group consisting of propylene carbonate, ethylene carbonate, butylene carbonate, diethyl carbonate, dimethyl carbonate, ethyl methyl carbonate, γ-butyrolactone, γ-valerolactone, methyl acetate, methyl propionate, ethyl propionate, tetrahydrofuran, 2-methyltetrahydrofuran, dioxane, dimethoxyethane, diethyl ether, dimethyl sulfoxide, and sulfolane.

**20.** The nonaqueous electrolyte solution according to any one of claims 1 to 19, wherein the solute that is an ionic salt is composed of a cation and an anion, the cation is selected from the group consisting of an alkali metal ion, an alkaline earth metal ion, and quaternary ammonium, and the anion is selected from the group consisting of hexafluorophosphate, tetrafluoroborate, perchlorate, hexafluoroarsenate, hexafluoroantimonate, and bis(fluorosulfonyl)imide.

**21.** The nonaqueous electrolyte solution according to claim 20, wherein the alkali metal ion is a lithium ion or a sodium ion.

**22.** The nonaqueous electrolyte solution according to any one of claims 1 to 21, further containing at least one selected from the group consisting of lithium difluorophosphate, sodium difluorophosphate, lithium fluorosulfate, sodium fluorosulfate, lithium trifluoromethanesulfonate, sodium trifluoromethanesulfonate, lithium difluorobis(oxalato)phosphate, sodium difluorobis(oxalato)phosphate, lithium difluorooxalatoborate, sodium difluorooxalatoborate, lithium bis(oxalato)borate, sodium bis(oxalato)borate, lithium tetrafluorooxalatophosphate, sodium tetrafluorooxalatophosphate, lithium tris(oxalato)phosphate, sodium tris(oxalato)phosphate, lithium difluoro(malonato)borate, sodium difluoro(malonato)borate, lithium tetrafluoro(malonato)phosphate, sodium tetrafluoro(malonato)phosphate, lithium monofluorophosphate, sodium monofluorophosphate, lithium bis(difluorophosphoryl)imide, sodium bis(difluorophosphoryl)imide, lithium (difluorophosphoryl)(fluorosulfonyl)imide, sodium (difluorophosphoryl)(fluorosulfonyl)imide, lithium bis(trifluoromethanesulfonyl)imide, sodium bis(trifluoromethanesulfonyl)imide, lithium bis(pentafluoroethanesulfonyl)imide, sodium bis(pentafluoroethanesulfonyl)imide, lithium (trifluoromethanesulfonyl)(pentafluoroethanesulfonyl)imide, sodium (trifluoromethanesulfonyl)(pentafluoroethanesulfonyl)imide, lithium (trifluoromethanesulfonyl)(fluorosulfonyl)imide, sodium (trifluoromethanesulfonyl)(fluorosulfonyl)imide, lithium (pentafluoroethanesulfonyl)(fluorosulfonyl)imide, sodium (pentafluoroethanesulfonyl)(fluorosulfonyl)imide, lithium tris(trifluoromethanesulfonyl)methide, sodium tris(trifluoromethanesulfonyl)methide, lithium acrylate, sodium acrylate, lithium methacrylate, sodium methacrylate, lithium methyl sulfate, sodium methyl sulfate, lithium ethyl sulfate, and sodium ethyl sulfate.

**23.** The nonaqueous electrolyte solution according to any one of claims 1 to 22, further containing at least one selected from the group consisting of cyclohexylbenzene, cyclohexylfluorobenzene, biphenyl, 2-fluorobiphenyl, t-butylbenzene, t-amylbenzene, 2-fluorotoluene, fluorobenzene, vinylene carbonate, oligomer of vinylene carbonate (number average molecular weight of 170 to 5000 in terms of polystyrene), vinyl ethylene carbonate, difluoroanisole, fluoroethylene carbonate, 1,6-diisocyanatohexane, ethynyl ethylene carbonate, trans-difluoroethylene carbonate, methyl propargyl carbonate, ethyl propargyl carbonate, dipropargyl carbonate, maleic anhydride, succinic anhydride,

1,3-propanesultone, 1,3-propenesultone, 1,4-butanesultone, dimethyl vinylene carbonate, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, phenyl difluorophosphate, 1,2-ethanedisulfonic anhydride, tris(trimethylsilyl) borate, succinonitrile, (ethoxy)pentafluorocyclotriphosphazene, tetrafluoro(picolinato)phosphate, difluoro(picolinato)borate, and 1,3-dimethyl-1,3-divinyl-1,3-di(1,1,1,3,3,3-hexafluoroisopropyl)disiloxane.

**24.** A nonaqueous electrolyte secondary battery, comprising

a negative electrode containing Si and/or silicon oxide as a negative electrode active material,
a positive electrode, and
the nonaqueous electrolyte solution according to any one of claims 1 to 23.

**25.** The nonaqueous electrolyte secondary battery according to claim 24, wherein the negative electrode active material further contains graphite.

**INTERNATIONAL SEARCH REPORT**

International application No.
**PCT/JP2024/020724**

**A. CLASSIFICATION OF SUBJECT MATTER**

***H01M 10/0567***(2010.01)i; ***H01M 4/36***(2006.01)i; ***H01M 4/38***(2006.01)i; ***H01M 4/48***(2010.01)i; ***H01M 4/587***(2010.01)i; ***H01M 10/052***(2010.01)i; ***H01M 10/054***(2010.01)i; ***H01M 10/0568***(2010.01)i; ***H01M 10/0569***(2010.01)i

FI: H01M10/0567; H01M4/36 E; H01M4/38 Z; H01M4/48; H01M4/587; H01M10/052; H01M10/054; H01M10/0568; H01M10/0569

According to International Patent Classification (IPC) or to both national classification and IPC

**B. FIELDS SEARCHED**

Minimum documentation searched (classification system followed by classification symbols)

H01M10/0567; H01M4/36; H01M4/38; H01M4/48; H01M4/587; H01M10/052; H01M10/054; H01M10/0568; H01M10/0569

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2021/111931 A1 (SANYO ELECTRIC CO., LTD.) 10 June 2021 (2021-06-10) claims 1-4, paragraphs [0037]-[0046], example 1 | 2, 8-10, 12, 14-25<br>1, 3-25 |
| Y | CN 114883648 A (XIANGHE KUNLUN NEW ENERGY MATERIAL CO., LTD.) 09 August 2022 (2022-08-09) claim 4, paragraphs [0007], [0041], example 1 | 1, 3-25 |
| Y | CN 113809401 A (ENVISION POWER TECHNOLOGY (JIANGSU) CO., LTD.) 17 December 2021 (2021-12-17) claims 1-2, examples | 3-25 |
| A | CN 114914542 A (SHENZHEN BAK BATTERY CO., LTD.) 16 August 2022 (2022-08-16) entire text | 1-25 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 August 2024** | **03 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**

International application No.
**PCT/JP2024/020724**

**C. DOCUMENTS CONSIDERED TO BE RELEVANT**

| Category* | Citation of document, with indication, where appropriate, of the relevant passages | Relevant to claim No. |
|---|---|---|
| A | CN 115053362 A (NINGDE AMPEREX TECHNOLOGY LTD.) 13 September 2022 (2022-09-13) entire text | 1-25 |
| A | CN 113130993 A (SHENZHEN YANYI NEW MATERIAL CO., LTD.) 16 July 2021 (2021-07-16) entire text | 1-25 |

Form PCT/ISA/210 (second sheet) (July 2022)

**INTERNATIONAL SEARCH REPORT**
**Information on patent family members**

International application No.
**PCT/JP2024/020724**

| Patent document cited in search report | Publication date (day/month/year) | Patent family member(s) | Publication date (day/month/year) |
|---|---|---|---|
| WO 2021/111931 A1 | 10 June 2021 | US 2023/0028128 A1<br>claims 1-4, paragraphs [0052]-[0063], example 1<br>EP 4071849 A1<br>CN 114762166 A | |
| CN 114883648 A | 09 August 2022 | (Family: none) | |
| CN 113809401 A | 17 December 2021 | (Family: none) | |
| CN 114914542 A | 16 August 2022 | (Family: none) | |
| CN 115053362 A | 13 September 2022 | WO 2023/050360 A1 | |
| CN 113130993 A | 16 July 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016133169 A
- WO 2017138452 A
- JP 2016027028 A
- JP 2016035820 A
- JP 2019102459 A
- JP 2020087690 A
- JP 2019106362 A
- US 20030113635 A1
- WO 2012120597 A
- US 20160359196 A1
- EP 003205655 A1
- JP 2000143677 A
- JP 2004256494 A
- JP HEI05104541 A
- JP 2009137834 A
- US 7135252 B
- JP 2008270201 A
- WO 2013118661 A
- JP 2013030284 A
- JP 2022191483 A


### Non-patent literature cited in the description


- *Can. J. Chem*, 2001, vol. 79, 1040-1048